# EUROPEAN PATENT APPLICATION

(11) **EP 4 624 804 A1**
(43) Date of publication of application: **01.10.2025**
(21) Application number: 23946348.2
(22) Date of filing: 06.09.2023
(51) Int. Cl.: F23D 14/02, F23D 14/46, F23D 14/58, F23M 5/08

(54) **PREMIXING AND MEMBRANE WALL COOLING BURNER HAVING BUILT-IN VERTICAL WATER TUBE, AND GAS FIRED BOILER**

(30) Priority: 25.07.2023 CN 202310923498
(71) Applicant: Xi'an Jiaotong University, Xi'an, Shaanxi 710049 (CN)
(72) Inventor: ZHAO, Qinxin, Xianning WestRoad, Beilin district Xi'an, Shaanxi 710049 (CN); WANG, Ning, Xianning WestRoad, Beilin district Xi'an, Shaanxi 710049 (CN); DENG, Shifeng, Xianning WestRoad, Beilin district Xi'an, Shaanxi 710049 (CN); QU, Teng, Xianning WestRoad, Beilin district Xi'an, Shaanxi 710049 (CN); SHAO, Huaishuang, Xianning WestRoad, Beilin district Xi'an, Shaanxi 710049 (CN)
(74) Representative: Kuttenkeuler, David
(86) International application number: PCT/CN2023/117155
(87) International publication number: WO 2025/020267

(57) **Abstract**

The present invention discloses a vertical water tube built-in premixed membrane-type wall-cooling burner and a gas boiler. The gas boiler includes a burner, a furnace, a heat exchanger, and a flue. The burner adopts a burning manner of premixer built-in and membrane-type wall cooling, and a central side-by-side tube bundle or an arc-side tube bundle is taken as a head of the burner, the furnace is two semi-cylindrical spaces enclosed by the burner and heat exchanger, and the heat exchanger is a water tube bundle that is connected with an upper annular header and a lower annular header and extends radially along 1-3 circles of circular arcs. The burner and the heat exchanger may be exchanged. After being burned by the burner, premixed gas generates flue gas that flushes a corresponding heat exchange region and is collected and discharged through the flue. The present invention has a compact structure, low resistance, high heat exchange efficiency, short gas process, uniform mixing and distribution, deflagration prevention, and high safety, and is suitable for blended burning of natural gas with low/zero-carbon fuel and pure fuel burning. Burning temperature is low, load is uniform, an adjustment ratio is large, and NO*ₓ* emissions are low; and the burner and the heat exchanger communicate with headers by using integrally or partially detachable flanges, which has high maintainability.

## Description

### TECHNICAL FIELD

The present invention belongs to the design field of efficient, energy-saving and environmentally-friendly compact burners, heat exchangers and boilers, and specifically relates to a vertical water tube built-in premixed membrane-type wall-cooling burner and a gas boiler.

### BACKGROUND

With the increasingly strict environmental standards, low-nitrogen burning and efficient heat exchange have become the key technologies for the research and development of gas boilers. At the same time, gas boilers with compact design are favored by users. Vertical gas boilers have become industrial boilers widely used at present due to their advantages of small occupied area, low steel consumption, fast steam production, and high degree of automation.

However, at present, many vertical gas boilers have high nitrogen oxide emissions, and it is difficult to transform low-nitrogen burning. Premixed water-cooled burning is a new type of burning manner, in which gas and air required for burning are completely mixed and then sprayed out through gaps of water-cooled tube bundles for burning. The arrangement of the water-cooled tube bundles cools a root of a flame, so as to significantly reduce the nitrogen oxide emissions of the boilers. Water-cooled burning has become a key technology for solving nitrogen oxide emissions from the industrial gas boilers. Heads of the current premixed water-cooled burner head are usually composed of cylindrical-surface water-cooled tube bundles or single-plane water-cooled tube bundles, with a small flame area, low burner heat load, low boiler power, and low adjustment ratio during operation. In addition, traditional water-cooled low-nitrogen burners are prone to carbon deposition at low loads, which are prone to leading to tube bundle scrapping after long-term operation.

Anhui BRIT Company has disclosed a cylindrical low-nitrogen energy-saving pressure-bearing water tube boiler structure in the patent CN 212841492.U, which uses a single-plane water-cooled tube bundle as a burner and uses membrane-type water-cooled tubes to enclose a furnace in shape such as a trapezoid, at the same time, a burner distribution head is made into a detachable drawer type, which not only achieves low-nitrogen burning but also facilitates disassembly and cleaning of the burner. However, the burner of this structure has low heat load and low adjustment ratio. Zhejiang Unipower Company has disclosed three types of premixed water-cooled gas boiler structures using multiple burning surfaces, multiple premixers, or multiple distributors in the patents CN 110425531. A, CN 107990552. A, and CN 108036509. A, which solve the problems of low heat load and low adjustment ratio during operation of a burner of a vertical premixed water-cooled gas boiler. However, the gas boiler has a large occupied area, poor structure compactness, complex structure, high cost, and poor maintainability.

In addition, current premixers are arranged at the most front ends of the burners, and after gas and air are mixed, mixed gas is equalized. The gas process is long, the gas and air are mixed nonuniformly, the flow resistance is high, the flow field uniformity is poor, and when the boiler ignites and burns, it is prone to detonation, which affects the safe operation of the boilers. Moreover, at present, the water-cooled tube bundles at the heads of the burners are mostly arranged in a staggered arrangement of two circles of plain tubes. The flame sprayed from the gaps of the water-cooled tube bundles at the heads of the burners is insufficient in rigidity, resulting in poor flame stability and difficulty in forming a stable flame surface, making it difficult to ignite and operate stably at low loads.

### SUMMARY

In order to solve the above problems of a vertical gas boiler, the present invention improves a traditional burner by placing a gas spray tube in a rear of a burner, and combining a gas pre-mixing process and flow-equalizing process inside the burner, and provides a new type of built-in premixed water-cooled burner, which structurally improves the vertical gas boiler. A premixed water-cooled burning manner is used, and a detachable double-plane premixed water-cooled burner that is axisymmetric or centrosymmetric is disposed in a middle of a cylindrical furnace, or a heating surface tube bundle of a semi-cylindrical furnace on one or two sides is directly used as part of the water-cooled burner, which increases a heat load of the burner and an adjustment ratio. The boiler has low nitrogen oxide emissions, high heat exchange efficiency, compact structure, and good maintainability.

In order to achieve the above objectives, the technical solution adopted by the present invention is: a vertical water tube built-in premixed membrane-type wall-cooling burner includes a first distribution chamber, a second distribution chamber and a water-cooled tube bundle, the first distribution chamber is provided with an air inlet, a gas distribution tube is disposed in the first distribution chamber, and a gas inlet is formed in the gas distribution tube; the first distribution chamber communicates with the second distribution chamber; the second distribution chamber includes a partition board and distribution orifice plates, one end of the partition board is connected with the first distribution chamber, and the other end of the partition board is connected with the distribution orifice plates; and a vertical region enclosed by the partition board and the distribution orifice plates is the second distribution chamber, the distribution orifice plates directly face the water-cooled tube bundle, the water-cooled tube bundle is a membrane-type wall tube bundle, the membrane-type wall tube bundle is provided with gas flow holes, and a membrane-type wall surface is a flat surface, an arc-shaped surface or a bending surface.

Further, the first distribution chamber is internally provided with a first flow-equalizing orifice plate and a plurality of spoiler columns, a second flow-equalizing orifice plate is arranged between the first distribution chamber and the second distribution chamber, the gas distribution tube is arranged between the first flow-equalizing orifice plate and the second flow-equalizing orifice plate, the spoiler columns are arranged in front and rear of the first flow-equalizing orifice plate, the spoiler columns are arranged in a length direction of the gas distribution tube, two ends of the spoiler columns are connected with the first distribution chamber, cross sections of the spoiler columns are triangular, V-shaped, square or circular, when the cross sections are V-shaped, bending angles of the V shapes face a direction of incoming air, and 3-50 spoiler columns are disposed.

Further, the gas distribution tube includes a first gas distribution tube, second gas distribution tubes, first gas spray orifices, second gas spray orifices and spoilers; one end or two ends of the first gas distribution tube is/are provided with a gas inlet, the first gas distribution tube communicates with the second gas distribution tubes, the first gas spray orifices are uniformly formed in a gas outlet surface of the first gas distribution tube, and the second gas spray orifices are uniformly formed in side surfaces of the second gas distribution tubes; 1-8 rows of the first gas spray orifices are provided, 1-4 rows of the second gas spray orifices are provided, the first gas spray orifices are arranged in line or in a staggered mode, and the second gas orifices are arranged in line or in a staggered manner; and the spoilers are welded at a top and a bottom of an interface between the first gas distribution tube and the second gas distribution tubes.

Further, a flow area in the first gas distribution tube in a gas inlet direction remains unchanged or gradually decreases, and a flow area in the second distribution chamber in a mixed gas flow direction remains unchanged or gradually decreases.

Further, the first gas distribution tube is horizontally placed above the first distribution chamber, one ends of 3-20 uniformly-arranged second gas distribution tubes vertically communicate with the first gas distribution tube, and the other ends of the second gas distribution tubes extend into the first distribution chamber; and the gas inlet(s) is/are located at one end, two ends and/or a middle of the first gas distribution tube, 1-3 gas inlets are provided, and the second gas distribution tubes are provided with the uniformly-arranged second gas spray orifices in an air incoming direction or away from the air incoming direction or in both directions.

Further, mixed gas of gas and air in the burner enters perpendicular to the distribution orifice plates or parallel to the distribution orifice plates, and 1-3 layers of the distribution orifice plates are disposed; a third flow-equalizing orifice plate is disposed at a tail of the first distribution chamber, a turning deflector is disposed when the gas enters parallel to the distribution orifice plate, the turning deflector is located at a junction of the first distribution chamber and the second distribution chamber, and the turning deflector is connected with the third flow-equalizing orifice plate; two sides of the turning deflector are connected with two sides of the first distribution chamber and the second distribution chamber, and a cross section is in a right angle "U" shape, a smooth transition "U" shape, a "V" shape, an "L" shape or a linear shape; and when the turning deflector is in the linear shape, the turning deflector is fixedly connected or hinged with the third flow-equalizing orifice plate.

Further, when mixed gas enters parallel to the distribution orifice plates, 1-10 vertical partition boards parallel to a mixed gas flow direction are uniformly disposed in the second distribution chamber in a direction perpendicular to the mixed gas flow direction, front edges of the vertical partition boards are connected with a top of the second distribution chamber, rear edges of the vertical partition boards are connected with the distribution orifice plates or spaced apart from the distribution orifice plates by 5-20 mm, and top ends and bottom ends of the vertical partition boards are respectively connected to a top surface and a bottom surface of the second distribution chamber.

Further, the membrane-type wall tube bundle includes a plurality of plain tubes, the adjacent two plain tubes are welded by flat steel, a length direction of the flat steel is parallel to a plain tube bank, the flat steel is located on or deviates from a center line of the plain tube bank, and the flat steel is correspondingly welded on both sides or one sides to the plain tubes; a thickness of the flat steel is in a range from 3 mm to 20 mm, and a welding penetration of an arc-shaped surface of the flat steel in contact with the plain tubes in a thickness direction is at least 3 mm; the flat steel is provided with regular premixed gas spray orifices from bottom to top, namely, gas flow holes, center lines of the premixed gas spray orifices are perpendicular to or inclined to a plane of the flat steel, a single line, two lines or three lines premixed gas spray orifices are provided, when more than one line of premixed gas spray orifices are provided, the adjacent two lines of premixed gas spray orifices are arranged in line or in a staggered manner, and the premixed gas spray orifices are circular, obround, triangular or rectangular; long axes of the obround premixed gas spray orifices are parallel to or perpendicular to longitudinal center lines of the tubes; and top angles of the triangular premixed gas spray orifices are rotation angles of 360° and may be arranged in an upright, reverse, or inclined manner, and long sides of the rectangular premixed gas spray orifices are parallel to or perpendicular to the longitudinal center lines of the tubes.

Further, the water-cooled tube bundle includes at least two rows of plain tubes, flat steel is welded to the first row of plain tubes, the flat steel is located between the second row of plain tubes to form a narrow gap with the second row of plain tubes, and flat steel fins or cushion blocks uniformly arranged are welded to the flat steel; the flat steel fins are cambered surfaces or rectangular surfaces, cross sections of the cushion blocks are square, circular, or obround, the cushion blocks are welded to the second row of plain tubes, and uniformly arranged gas flow holes are formed among the plain tubes, the cushion blocks and the flat steel; the flat steel is provided with an adjustable spray orifice baffle to block the premixed gas spray orifices or the gas flow holes formed in the cushion blocks, the adjustable spray orifice baffle is provided with premixed gas spray orifices of the same size and position as the gas flow holes, the adjustable spray orifice baffle slides in an axial direction of the membrane-type wall tube, and a sliding range is able to cover the premixed gas spray orifices.

Further, the membrane-type wall tube bundle includes a plurality of plain tubes, channel steel, steel I-beams, arc steel, angle steel, small circular tubes or semi-circular tubes are welded among the plain tubes, and when the arc steel is welded among the plain tubes, radian *α* of the arc steel is 0<*α*<π; and when the angle steel is welded among the plain tubes, an included angle β of the angle steel is 0<β<180°.

Further, the membrane-type wall tube bundle is a combination of finned tubes and plain tubes, the finned tubes are bent on opposite sides, the plain tubes face a furnace or face away from the furnace, and the finned tubes are spiral finned tubes, circular finned tubes, square finned tubes or H-shaped finned tubes.

At the same time, the present invention provides a vertical water tube built-in premixed membrane-type wall-cooling burning gas boiler, including a burner, a heat exchanger, a flue, an economizer, a condenser and a chimney; the burner and the heat exchanger enclose two axisymmetric semi-cylindrical furnaces, and two heating surfaces of a planar heat exchange section and an arc-shaped heat exchange section are disposed inside the furnaces; the burner is disposed on chord sides of the semi-cylindrical furnaces, and the heat exchanger is disposed on arc sides of the semi-cylindrical furnaces, or the burner is disposed on the arc sides of the semi-cylindrical furnaces, and the heat exchanger is disposed on the chord sides of the semi-cylindrical furnaces, or the burner and the heat exchanger are respectively disposed on the arc sides of the two semi-cylindrical furnaces; the burner uses a premixed water-cooled burner, with a tube bundle of the planar heat exchange section or the arc-shaped heat exchange section as a water-cooled tube bundle of the burner; when the burner is located on the chord sides of the semi-cylindrical furnaces, flue gas from the two semi-cylindrical furnaces flows towards an outside of a cylinder; when the burner is located on the arc sides of the semi-cylindrical furnaces, the two semi-cylindrical furnaces communicate with each other, and the flue gas flows into the cylinder or flows in from one side of the cylinder and flows out from the other side of the cylinder; the burner, the heat exchanger, the flue, the economizer, the condenser and the chimney communicate with one another in a flow direction of the flue gas; and the burner uses the vertical water tube built-in premixed membrane-type wall-cooling burner according to any one of claims 1-12.

Further, the planar heat exchange section includes a tubular upper header, side-by-side heat exchange tube bundles, and a tubular lower header; two ends of the side-by-side heat exchange tube bundles are respectively connected with the tubular upper header and the tubular lower header; the arc-shaped heat exchange section includes an annular upper header, an inner-ring heat exchange tube bundle, an outer-ring heat exchange tube bundle and an annular lower header, the outer-ring heat exchange tube bundle and the inner-ring heat exchange tube bundle are disposed along a semi-cylindrical surface, and two ends of the outer-ring heat exchange tube bundle and the inner-ring heat exchange tube bundle are connected with the annular upper header and the annular lower header; the outer-ring heat exchange tube bundle and the inner-ring heat exchange tube bundle are arranged in a staggered manner; a bottom end of the annular upper header and a top end of the annular lower header are respectively in sealed connection with a furnace upper baseplate and a furnace lower baseplate; and housing baffles are disposed on outer sides of the two semi-cylindrical furnaces.

Further, when a farthest distance between the tubular upper header and the tubular lower header is less than a distance between a bottom of the annular upper header and a top of the annular lower header, the burner is detachable as a whole, a tubular header steam outlet and a tubular header water inlet are respectively formed in two ends of the tubular upper header and the tubular lower header in an axis direction, the tubular header steam outlet and the tubular header water inlet are connected with a communicating tube through a flange, the communicating tube is a 180° bent tube, one end of the communicating tube is tightly connected with the flange on the tubular upper header or the tubular lower header, and the other end of the communicating tube communicates with an outer side of the annular upper header or the annular lower header; when the farthest distance between the tubular upper header and the tubular lower header is greater than the distance between the bottom of the annular upper header and the top of the annular lower header, the burner is partially detachable, and the remaining part of the burner, except for the tubular upper header, the side-by-side heat exchange tube bundle, and the tubular lower header, is able to be withdrawn in a horizontal direction; two ends of axes of the tubular upper header and the tubular lower header respectively communicate with the annular upper header and the annular lower header, and connecting parts are an inner side face or a top of the annular upper header and an inner side face or a bottom of the annular lower header; and a disassembly part of the burner is connected and sealed with the annular upper header, the annular lower header, the furnace upper baseplate, the furnace lower baseplate, and the housing baffles using a drawer structure.

Further, when the burner is disposed on the chord sides of the semi-cylindrical furnaces, the planar heat exchange section tube bundle is used as a water-cooled tube bundle of the burner, and the flue is disposed on outer sides of arc-shaped surfaces of the two semi-cylindrical furnaces; and when the burner is disposed on the arc sides of the semi-cylindrical furnaces, the outer-ring heat exchange tube bundle and the inner-ring heat exchange tube bundle disposed along the semi-cylindrical surface serve as the water-cooled tube bundles of the burner, and the flue is disposed on a side surface between the two semi-cylindrical furnaces or on an outer side of the other arc-shaped surface of the semi-cylindrical furnaces.

Further, a downcomer is arranged on a periphery of a heating surface of the heat exchanger, and two ends of the downcomer are connected with the annular upper header and the annular lower header to form a natural circulation steam boiler.

Further, radiation heating tube bundles are arranged in the semi-cylindrical furnaces, the radiation heating tube bundles are concave inward at one circumference, and each radiation heating tube bundle is divided into three sections: an upper inclined section, a middle vertical section and a lower inclined section; and the three sections of one radiation heating tube are located in the same plane, the upper inclined sections and the lower inclined sections face the same direction, tops of the radiation heating tube bundles are connected with an inner side or a top of the annular upper header, bottoms of the radiation heating tube bundles are connected with an inner side or a bottom of the annular lower header, the radiation heating tube bundles are uniformly arranged in a circumferential direction, and 2-5 radiation heating tube bundles on two sides of the burner decrease lengths of the upper inclined sections and lower inclined sections.

Further, vertical cross sections of the annular upper header and the annular lower header are rectangles with chamfered or inverted arc on all sides, circles, or ellipses, 2-3 circles of vertical heat exchange tube bundles are disposed between the annular upper header and the annular lower header, the inner-ring heat exchange tube bundle close to the furnace is a plain tube, a spiral finned tube or an extended surface tube, when the inner-ring heat exchange tube bundle is the spiral finned tube, a height of a fin is less than 10 mm, and when the inner-ring heat exchange tube bundle is the extended surface tube, a height of an extended surface is less than 10 mm; the outer-ring heat exchange tube bundle is a reinforced heat exchange tube bundle of a spiral finned tube, extended surface tube, or special-shaped tube structure, and the height of the fin or the extended surface is in a range from 30 mm to 100 mm; an annular header water inlet is disposed below a steam-water boundary on a side surface or at a bottom of the annular upper header, and an annular header steam outlet is disposed above the steam-water boundary on the side surface or at a top of the annular upper header; and a pollutant drainage outlet is formed in a side surface or a bottom of the annular lower header.

Further, 1-3 circles of tube bundles are disposed at the arc-shaped heat exchange section, a cross section enclosed by the tube bundles of the arc-shaped heat exchange section is arc-shaped, trapezoidal or "V"-shaped, and 1-2 rows of plain tubes, spiral finned tubes, special-shaped tubes and/or gap deflectors are disposed at the side-by-side heat exchange tube bundle; a gap deflector is disposed between two adjacent heat exchange tubes of the outer-ring heat exchange tube bundle, and the gap deflector is located on an inner side of the outer-ring heat exchange tube bundle; or, a gap deflector is disposed between two adjacent heat exchange tubes of the inner-ring heat exchange tube bundle, and the gap deflector is located on an outer side of the inner-ring heat exchange tube bundle; or, gap deflectors are arranged in both the outer-ring heat exchange tube bundle and the inner-ring heat exchange tube bundle; and a reinforced heat exchange channel is formed between the gap deflector and an outer wall of the heat exchange tube.

Further, two heat exchange tubes at two ends of the inner-ring heat exchange tube bundle and the outer-ring heat exchange tube bundle are both disposed as plain tubes, a sealing tube is disposed between the plain tubes and tube bundles at two ends of the side-by-side heat exchange tube bundle, the sealing tube is a plain tube, the sealing tube is tangent to the tube bundles at the two ends of the side-by-side heat exchange tube bundle, the two ends of the sealing tube respectively communicate with the annular upper header and the annular lower header, and the two ends of the sealing tube are provided with bending structures; and a sealing plate is disposed to seal the two plain tubes at the same end of the inner-ring heat exchange tube bundle and the outer-ring heat exchange tube bundle, the sealing tube, and a longitudinal gap of the side-by-side heat exchange tube bundle at one end or two ends when the burner is located on the arc sides of the semi-cylindrical furnaces.

Further, a first flow-equalizing orifice plate, a second flow-equalizing orifice plate, a third flow-equalizing orifice plate, a distribution orifice plate, a sealing plate, a furnace upper baseplate, a furnace lower baseplate and a housing baffle are all made of materials that are resistant to high temperature and deformation, and tube bundle surfaces of a side-by-side heat exchange tube bundle, an inner-ring heat exchange tube bundle and a radiation heating tube bundle in direct contact with high-temperature flue gas are processed by spraying a nickel-chromium alloy; and the burner is a natural gas burner, a natural gas blended low/zero-carbon fuel burner, or a pure low/zero-carbon fuel burner, and a working medium of the heat exchanger is water or heat conducting oil.

Further, when the burner is disposed on the chord sides of the semi-cylindrical furnaces, one double-sided burner or two single-sided burners are arranged with a side-by-side heat exchange tube bundle as a water-cooled tube bundle, and a flow area of the burner from a burner inlet to a burner end gradually decreases; when one double-sided burner is arranged, gas enters the burner on one side in a direction where semi-cylindrical furnace chords are located, and exits on two sides in a direction perpendicular to a gas inlet direction, and the burner is axisymmetric in the direction perpendicular to the gas inlet direction; and when the two single-sided burners are arranged, the gas enters the burner on the two sides or one side in the direction where the semi-cylindrical furnace chords are located, and exits on the two sides in the direction perpendicular to the gas inlet direction, and the burner is centrosymmetric or axisymmetric.

Further, when the burner is disposed on the arc sides of the semi-cylindrical furnaces, one or two single-sided burners are arranged with an outer-ring heat exchange tube bundle and an inner-ring heat exchange tube bundle as water-cooled tube bundles, a front end of a cross section of the burner is square, a rear end is crescent-shaped, and a distribution orifice plate is arc-shaped; a diameter of the outer-ring heat exchange tube bundle is greater than a diameter of the inner-ring heat exchange tube bundle, a gap formed between adjacent tubes of the outer-ring heat exchange tube bundle is in a range from 2 mm to 5mm, and a gap formed between adjacent tubes of the inner-ring heat exchange tube bundle is in a range from 4 mm to 10mm; and the number of lines of the outer-ring heat exchange tube bundle is the same as the number of lines of spray orifices in the distribution orifice plate, or the number of lines of the spray orifices in the distribution orifice plate is an integral multiple of the number of lines of the outer-ring heat exchange tube bundle, and the outer-ring heat exchange tube bundle directly faces the spray orifices in the distribution orifice plate.

Further, the flue includes flue gas headers, a flue gas conduit and a flue outlet, when the burner is disposed on the chord sides of the semi-cylindrical furnaces, double flues are provided, the two flue gas headers are connected through the flue gas conduit, and flue gas in the two flue gas headers is collected through the flue gas conduit and then discharged from the flue outlet; when the burner is disposed on the arc sides of the semi-cylindrical furnaces, a single flue is provided, and the flue gas in the flue gas headers is directly discharged from the flue outlet; the flue outlet sequentially communicates with the economizer, the condenser and the chimney; and an outlet of the fan communicates with the burner, and a narrow surface of the fan is parallel to a corresponding connection surface of the burner.

Further, one or two ignition needles are arranged on each burning surface, the ignition needle is able to extend into a furnace from a side surface, a top or a bottom of the furnace, the ignition needle correspondingly penetrates through a sealing plate or a furnace upper baseplate or a furnace lower baseplate to extend into the furnace, and the ignition needle is 10-50 mm away from an outer wall of a side-by-side heat exchange tube bundle or an outer wall of an inner-ring heat exchange tube bundle.

Compared with the prior art, the present invention at least has the following beneficial effects:
by placing a gas spray tube in the rear of the burner and combining a gas premixing process and a flow-equalizing process inside the burner, the present invention provides a new type of built-in premixed water-cooled burner. A gas flow process is reduced, mixing distribution is uniform, a flow resistance is low, and the burner is suitable for burning with blended low/zero-carbon fuels or pure low/zero-carbon fuels, ensuring burning safety. The present invention adopts a combination of the membrane-type wall tube bundle or the finned tubes and the plain tubes as the water-cooled tube bundle of the burner, which rectifies incoming premixed gas, improves a flame rigidity, is easy to ignite and burn stably, is not prone to tempering and flame lifting, and has a short flame length, small furnace space, and low pollutant emissions.

Based on the present invention, the premixed water-cooled burner is provided, and can be arranged as a relative burning surface to increase a flame area while reducing nitrogen oxide emissions, and increase a heat load of the burner. An axisymmetric or centrosymmetric double-plane premixed water-cooled burner is disposed in the middle of the cylindrical furnace, or the heating surface bundle(s) of one or two semi-cylindrical furnaces is/are directly used as a part of the water-cooled burner, and, meanwhile, half of the burner can be opened separately for burning, and an adjustment ratio is increased. The present invention adopts two semi-circular cylindrical spaces as the furnaces, and the burner, the heat exchanger, and the flue are all symmetrical structures, which is uniform in burning and low in resistance, has high adaptability to the boiler, and can be used as a transformation solution for other industrial boilers. By disposing the water-cooled tube bundles for the burner and the heat exchange tube bundles, the heating surface is increased, heat exchange efficiency is improved, and a structure can be made more compact.

Further, the burner of the present invention is designed as a detachable drawer type, which facilitates the disassembly and cleaning of the burner. A space left by the disassembly of the burner facilitates the maintenance and cleaning of the interior of the furnace, greatly improving the maintainability of the boiler.

Further, sizes of the spray orifices of the burner of the present invention may be adjusted, and only the adjustable spray orifice baffle can be moved by a small distance to achieve large-scale load adjustment, with strong load adaptability.

Further, the present invention additionally arranges the radiation heating tube bundles on the basis of disposing the water-cooled tube bundles of the burner and the heat exchange tube bundles in the furnace, which further improves the compactness of the structure. Heat exchange is reinforced in a manner such as the spiral finned tubes, the deflector, and the narrow gap, resulting in high heat exchange efficiency and low flow resistance.

Further, the present invention prolongs the operating life and increases safety of the boiler by disposing refractory materials and spraying the nickel-chromium alloy on the surface of the tube bundle in direct contact with the high-temperature flue gas.

### BRIEF DESCRIPTION OF THE DRAWINGS

Fig. 1a is a schematic top sectional view of a boiler in solution 1 of the present invention.
Fig. 1b is a schematic top sectional view of a boiler in solution 2 of the present invention.
Fig. 1c is a schematic top sectional view of a boiler in solution 3 of the present invention.
Fig. 1d is a schematic top sectional view of a boiler in solution 4 of the present invention.
Fig. 1e is a schematic top sectional view of a boiler in solution 5 of the present invention.
Fig. 2a is a schematic front sectional view of a boiler in solution 1 of the present invention.
Fig. 2b is a schematic right sectional view of a boiler in solution 2 of the present invention.
Fig. 2c is a schematic front sectional view of a boiler in solution 3 of the present invention.
Fig. 2d is a schematic right sectional view of a boiler in solution 4 of the present invention.
Fig. 2e is a schematic right sectional view of a boiler in solution 5 of the present invention.
Fig. 3a is a schematic front sectional view of a burner in solution 2 of the present invention.
Fig. 3b is a schematic top sectional view of a burner in solution 2 of the present invention.
Fig. 3c is a schematic top sectional view of a first form of a burner in solution 1 of the present invention.
Fig. 3d is a schematic top sectional view of a second form of a burner in solution 1 of the present invention.
Fig. 4a is a schematic axis sectional view of a burner in solution 3 and solution 4 of the present invention.
Fig. 4b is a schematic front sectional view of a burner in solution 3 and solution 4 of the present invention.
Fig. 4c is a schematic top sectional view of a burner in solution 3 and solution 4 of the present invention.
Fig. 5a is a schematic top sectional view of a burner in solution 5 of the present invention.
Fig. 5b is a schematic left sectional view of a burner in solution 5 of the present invention.
Fig. 5c is a schematic front sectional view of a burner in solution 5 of the present invention.
Fig. 6a is a schematic partial left sectional view of a burner at a turning position in solution 5 of the present invention.
Fig. 6b is a schematic partial left sectional view of a distribution chamber in a first form of a burner in solution 5 of the present invention.
Fig. 6c is a schematic partial front sectional view of a distribution chamber in a first form of a burner in solution 5 of the present invention.
Fig. 6d is a schematic partial sectional view of a distribution chamber in a second form of a burner in solution 5 of the present invention.
Fig. 6e is a schematic partial top sectional view of a distribution chamber in a second form of a burner in solution 5 of the present invention.
Fig. 7a is a schematic diagram of a tube bank with circular holes for a membrane-type wall water-cooled burning head in the present invention.
Fig. 7b is a schematic diagram of a tube bank with obround holes for a membrane-type wall water-cooled burning head in the present invention.
Fig. 8a is a schematic diagram of welding between flat steel of a membrane-type wall water-cooled burning head and two sides of a plain tube in the present invention.
Fig. 8b is a schematic diagram of welding between flat steel of a membrane-type wall water-cooled burning head and one side of a plain tube in the present invention.
Fig. 9a is a schematic diagram of an arrangement manner of combining a spiral finned tube of a water-cooled burning head with a plain tube in the present invention.
Fig. 9b is a schematic diagram of an arrangement manner of combining an "H"-shaped finned tube of a water-cooled burning head with a plain tube in the present invention.
Fig. 9c is a schematic diagram of an arrangement manner of combining a straight "H"-shaped finned tube of a water-cooled burning head with a plain tube in the present invention.
Fig. 10a is a schematic diagram of an arrangement manner of combining flat steel of a water-cooled burning head with two rows of plain tubes in the present invention.
Fig. 10b is a schematic diagram of an arrangement manner of combining flat steel of a water-cooled burning head with a plain tube through a cushion block in the present invention.
Fig. 10c is a schematic diagram of an arrangement manner of combining flat steel of a water-cooled burning head with two rows of plain tubes through arc-shaped plate fins in the present invention.
Fig. 10d is a schematic diagram of an arrangement manner of combining flat steel of a water-cooled burning head with two rows of plain tubes through rectangular plate fins in the present invention.
Fig. 10e is a schematic diagram of an arrangement manner of combining flat steel of a water-cooled burning head with two rows of plain tubes through needle fins in the present invention.
Fig. 11a is a schematic axial view of an adjustment manner of a size of a premixed gas spray orifice of a water-cooled burning head in the present invention.
Fig. 11b is a schematic front view of an adjustment manner of a size of a premixed gas spray orifice of a water-cooled burning head in the present invention.
Fig. 11c is a schematic front view of an adjustment manner of a size of a cushion block spray nozzle of a water-cooled burning head in the present invention.
Fig. 12a is a schematic diagram of an arrangement manner of channel steel of a membrane-type wall water-cooled burning head and a plain tube in the present invention.
Fig. 12b is a schematic diagram of an arrangement manner of a steel I-beam of a membrane-type wall water-cooled burning head and a plain tube in the present invention.
Fig. 12c is a schematic diagram of an arrangement manner of arc steel of a membrane-type wall water-cooled burning head and a plain tube in the present invention.
Fig. 12d is a schematic diagram of an arrangement manner of angle steel of a membrane-type wall water-cooled burning head and a plain tube in the present invention.
Fig. 12e is a schematic diagram of an arrangement manner of a small circular tube of a membrane-type wall water-cooled burning head and a plain tube in the present invention.
Fig. 12f is a schematic diagram of an arrangement manner of a semi-circular tube of a membrane-type wall water-cooled burning head and a plain tube in the present invention.
Fig. 13 is a schematic front view of an overall structure of a boiler in the present invention.
Fig. 14a is a schematic diagram of a first arrangement manner of a fan in the present invention.
Fig. 14b is a schematic diagram of a second arrangement manner of a fan in the present invention.
Fig. 14c is a schematic diagram of a third arrangement manner of a fan in the present invention.

Wherein, 1: Burner, 11: Burner inlet, 111: Gas inlet, 112: Air inlet, 12: First distribution chamber, 121: Gas distribution tube, 1211: First gas distribution tube, 1212: Second gas distribution tube, 1213: First gas spray orifice, 1214: Second gas spray orifice, 1215: Spoiler, 122: First flow-equalizing orifice plate, 123: Second flow-equalizing orifice plate, 124: Third flow-equalizing orifice plate, 125: Spoiler column, 126: Turning deflector, 13: Second distribution chamber, 131: Partition board, 132: Distribution orifice plate, 14: Planar heat exchange section, 141: Tubular upper header, 142: Side-by-side heat exchange tube bundle, 1421: First row of plain tubes, 1422: Second row of plain tubes, 143: Tubular lower header, 144: Tubular header water inlet, 145: Tubular header steam outlet, 15: Ignition needle, 16: Flat steel, 161: Premixed gas spray orifice, 162: Cushion block, 163: Flat steel fin, 17: Weld seam, 18: Adjustable spray orifice baffle, 2: Heat exchanger, 21: Arc-shaped heat exchange section, 211: Annular upper header, 212: Inner-ring heat exchange tube bundle, 213: Outer-ring heat exchange tube bundle, 214: Downcomer, 215: Annular lower header, 216: Annular header water inlet, 217: Annular header steam outlet, 218: Pollutant drainage outlet, 22: Sealing plate, 23: Gap deflector, 24: Furnace upper baseplate, 25: Furnace lower baseplate, 26: Housing baffle, 27: Radiation heating tube bundle, 28: Sealing tube, 29: Communicating tube, 3: Flue, 31: Flue gas header, 32: Flue gas conduit, 33: Flue outlet, 4: Economizer, 5: Condenser, 6: Chimney, and 7: Fan.

### DETAILED DESCRIPTION

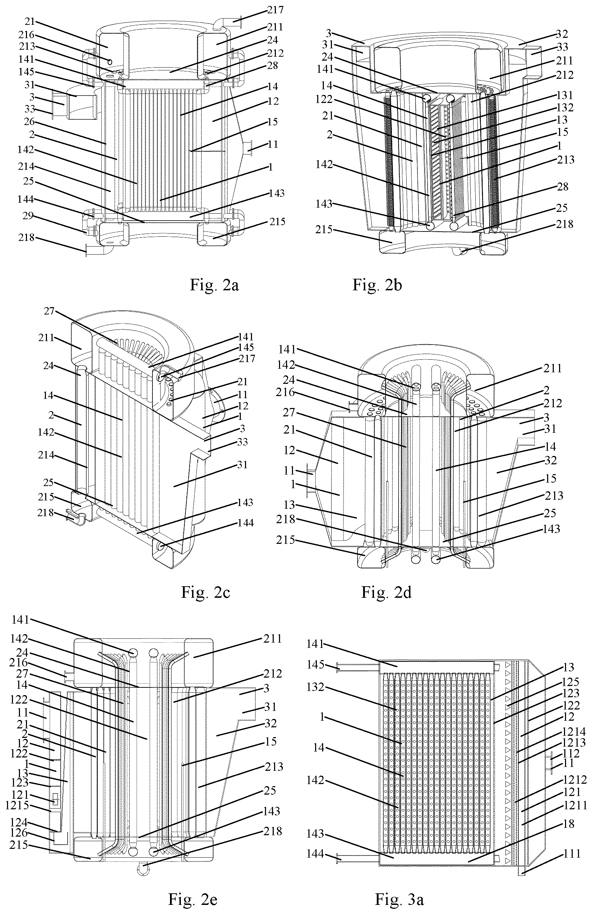

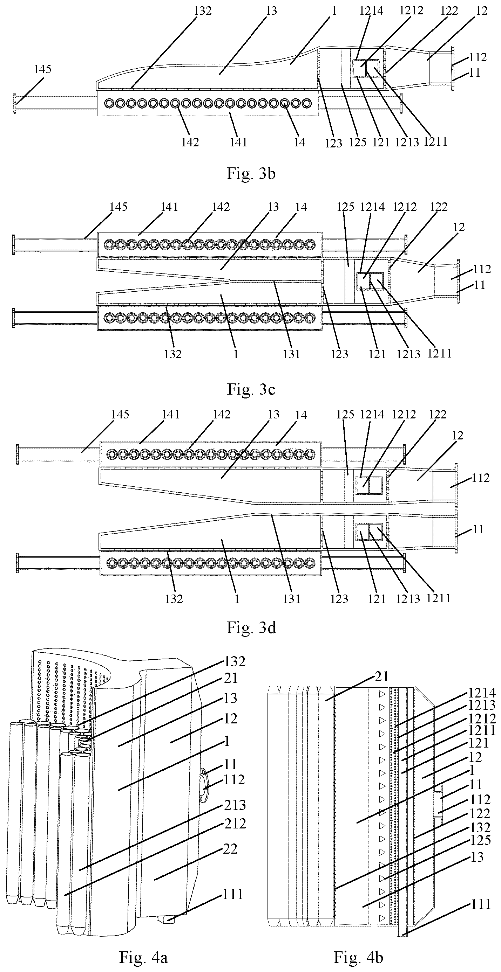

Referring to Fig. 3, Fig. 4 and Fig. 5, a vertical water tube built-in premixed membrane-type wall-cooling burner provided by the present invention includes a first distribution chamber 12, a second distribution chamber 13, and a water-cooled tube bundle, the first distribution chamber 12 is provided with an air inlet 112, a gas distribution tube 121 is disposed in the first distribution chamber 12, and a gas inlet 111 is formed in the gas distribution tube 121; the first distribution chamber 12 communicates with the second distribution chamber 13; the second distribution chamber 13 includes a partition board 131 and distribution orifice plates 132, one end of the partition board 131 is connected with the first distribution chamber 12, and the other end of the partition board is connected with the distribution orifice plates 132; and a vertical region enclosed by the partition board 131 and the distribution orifice plates 132 is the second distribution chamber 13, the distribution orifice plates 132 directly face the water-cooled tube bundle, the water-cooled tube bundle is a membrane-type wall tube bundle, the membrane-type wall tube bundle is provided with gas flow holes, and a membrane-type wall surface is a flat surface, an arc-shaped surface or a bending surface.

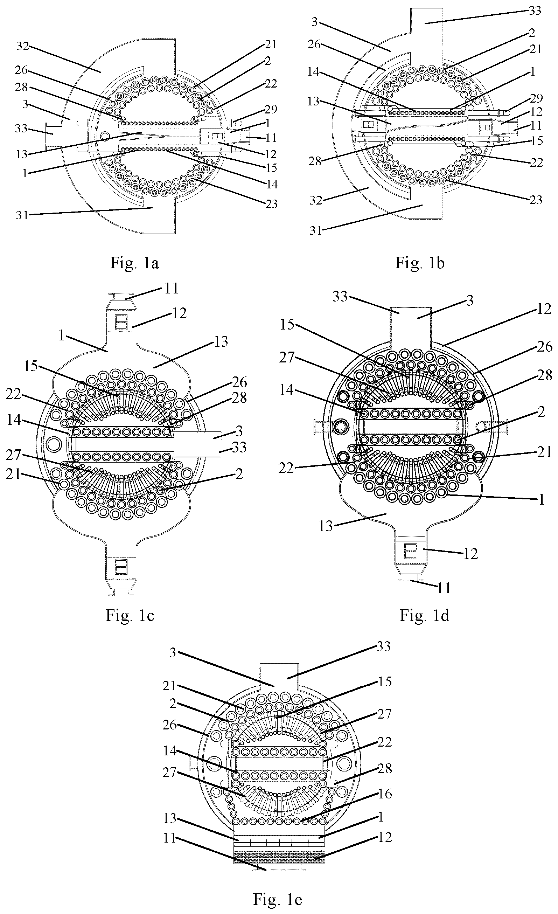

Referring to Fig. 1 and Fig. 2, the present invention provides a vertical water tube built-in premixed membrane-type wall-cooling burning gas boiler, including a burner 1, a heat exchanger 2, a flue 3, an economizer 4, a condenser 5, a chimney 6, and supporting boiler accessories such as a fan 7, a water pump, a gas valve group, and a controller; and the burner 1 includes a burner inlet 11, a first distribution chamber 12, a first flow-equalizing orifice plate 122, a second distribution chamber 13, a distribution orifice plate 132, a planar heat exchange section 14, a tubular upper header 141, a side-by-side heat exchange tube bundle 142, a tubular lower header 143, a tubular header water inlet 144, a tubular header steam outlet 145, and an ignition needle 15.

The heat exchanger 2 includes an arc-shaped heat exchange section 21, an annular upper header 211, an inner-ring heat exchange tube bundle 212, an outer-ring heat exchange tube bundle 213, a downcomer 214, an annular lower header 215, an annular header water inlet 216, an annular header steam outlet 217, a pollutant drainage outlet 218, a sealing plate 22, a gap deflector 23, a furnace upper baseplate 24, a furnace lower baseplate 25, a housing baffle 26, a radiation heating tube bundle 27, a sealing tube 28, and a communicating tube 29; the flue 3 includes a flue gas header 31, a flue gas conduit 32, and a flue outlet 33; the burner 1, the heat exchanger 2, the flue 3, the economizer 4, the condenser 5, and the chimney 6 are connected in sequence, a top of the housing baffle 26 is connected with the annular upper header 211, a bottom of the housing baffle 26 is connected with the annular lower header 215, and a side end of the housing baffle 26 is connected with the flue 3, so as to expose only an inlet part of the burner 1 and an outlet part of the flue 3; the burner 1, the heat exchanger 2, and the flue 3 form a cylindrical vertical boiler body; the burner 1 and the heat exchanger 2 enclose two axisymmetric semi-cylindrical furnaces; the burner 1 is located on chord sides of the semi-cylindrical furnaces, and the heat exchanger 2 is located on arc sides of the semi-cylindrical furnaces; or, the burner 1 is located on the arc sides of the semi-cylindrical furnaces, and the heat exchanger 2 is located on the chord sides of the semi-cylindrical furnaces; or, the burner 1 and the heat exchanger 2 are located on the two arc sides respectively; and the burner 1 uses a premixed water-cooled burning manner, and includes two opposite burning surfaces corresponding to two heat exchange regions. A mixed gas inlet 11 of the burner 1 and the flue outlet 33 of the flue 3 are both arranged on side surfaces of the furnaces.

Referring to Fig. 1 and Fig. 2, the gas boiler includes five arrangement solutions. Preferably, in solution 1, the burner 1 is located on one sides of semi-cylindrical furnace chords, the heat exchanger 2 is located on one sides of two cambered surfaces of the two semi-cylindrical furnaces, gas enters the burner 1 on one side in a direction where the semi-cylindrical furnace chords are located, and exits on two sides in a direction perpendicular to a gas inlet direction, and the burner 1 is axisymmetric in the direction perpendicular to the gas inlet direction. In solution 2, the burner 1 is located on two chord sides of the semi-cylindrical furnaces, the heat exchanger 2 is located on two arc sides of the two semi-cylindrical furnaces, the gas enters the burner 1 on the two sides in the direction where the semi-cylindrical furnace chords are located, and exits on the two sides in the direction perpendicular to the gas inlet direction, and the burner 1 is centrosymmetric. In solution 3, the burner 1 is located on the two arc sides of the two semi-cylindrical furnaces, the heat exchanger 2 is located on the chord sides of the semi-cylindrical furnaces, the gas enters the burner 1 on the two sides in the direction where the semi-cylindrical furnace chords are located, and exits on one side in the direction where the semi-cylindrical furnace chords are located, and the burner 1 is axisymmetric in a direction parallel to the gas inlet direction. In solution 4, the burner 1 and the heat exchanger 2 are respectively located on the two arc sides of the two semi-cylindrical furnaces, the gas enters the burner 1 on one side in the direction where the semi-cylindrical furnace chords are located, and exits on the other side perpendicular to the direction where the semi-cylindrical furnace chords are located, and the burner is axisymmetric in the direction parallel to the gas inlet direction or perpendicular to the gas inlet direction. In solution 5, the burner 1 and the heat exchanger 2 are respectively located on the two arc sides of the two semi-cylindrical furnaces, the arc-shaped surface of the burner 1 is changed to a trapezoidal surface, the gas enters the burner 1 on one side perpendicular to the direction where the semi-cylindrical furnace chords are located, and exits on the other side perpendicular to the direction where the semi-cylindrical furnace chords are located, and the burner is axisymmetric in the direction parallel to the gas inlet direction. The flue gas in solution 1 and solution 2 is discharged from a boiler body via the two flues 3 in the direction perpendicular to the direction where the semi-cylindrical furnace chords are located. The flue gas in solution 3 is discharged from the boiler body via one or two flues 3 in the direction parallel to the direction where the semi-cylindrical furnace chords are located. The flue gas in solution 4 and solution 5 is discharged from the boiler body via one flue 3 in the direction perpendicular to the direction where the semi-cylindrical furnace chords are located. Referring to Fig. 1a, Fig. 1b, and Fig. 1c, the direction of the mixed gas entering the boiler body in solution 1, solution 2, and solution 3 is perpendicular to the direction of the flue gas leaving the boiler body, the direction of the mixed gas entering the boiler body points towards centers of the furnaces, and the direction of the flue gas leaving the boiler body deviates from the centers of the furnaces. Referring to Fig. 1d and Fig. 1e, the direction of the mixed gas in solution 4 and solution 5 entering the boiler body is parallel to the direction of the flue gas leaving the boiler body, the direction of the mixed gas entering the boiler body points towards the centers of the furnaces, and the direction of the flue gas leaving the boiler body deviates from the centers of the furnaces. In the above solution, when the two flues 3 need to be disposed, the two flues 3 are connected through the flue gas conduit 32.

Referring to Fig. 1a, Fig. 1b, Fig. 3a, Fig. 3b, Fig. 3c and Fig. 3d, the burner 1 in solution 1 and solution 2 includes a burner inlet 11, a first distribution chamber 12, a first flow-equalizing orifice plate 122, a second distribution chamber 13, a distribution orifice plate 132, a tubular upper header 141, a side-by-side heat exchange tube bundle 142, a tubular lower header 143, a tubular header water inlet 144, a tubular header steam outlet 145 and an ignition needle 15. The burner inlet 11 is a cylinder body, a cross section of the cylinder body is circular or square or the like, two ends of the cylinder body are open, and one end is provided with a flange. A flange side of the burner inlet 11 is closely connected with the fan 7, the other end of the burner inlet 11 is connected with the first distribution chamber 12, the first distribution chamber 12 is surrounded by cylinder bodies in a form of circle to rectangle or square to rectangle, as well as rectangular cylinder bodies, and a height of the first distribution chamber 12 is equal to a distance between a bottom of the annular upper header 211 and a top of the annular lower header 215. The first flow-equalizing orifice plate 122 is welded to a rectangular cylinder body side of the first distribution chamber 12, the first flow-equalizing orifice plate 122 is rectangular, and circular, square, or triangular spray orifices are uniformly formed in the first flow-equalizing orifice plate 122. The second distribution chamber 13 is welded to a rear end of the first flow-equalizing orifice plate 122, the second distribution chamber 13 is approximately a prismatic space, a cross section of the second distribution chamber 13 is in a shape of a scissor, a right-angled trapezoid, a curved-edge right-angled trapezoid, a rectangle, etc., and the cross section of the second distribution chamber 13 gradually decreases or remains unchanged in a gas flow direction. One or two sides of the second distribution chamber 13 are distribution orifice plates 132, the distribution orifice plates 132 may be correspondingly disposed as flat plates, folded plates, or curved plates according to a top section of the second distribution chamber 13, circular, square, or triangular spray orifices are uniformly formed in the distribution orifice plates 132, hydraulic diameters of the spray orifices are less than 4 mm, and one or two rows of uniformly-arranged side-by-side heat exchange tube bundles 142 are disposed at the opposite positions of the distribution orifice plates 132. The number of lines of the side-by-side heat exchange tube bundles 142 is the same as the number of lines of the spray orifices in the distribution orifice plates 132, or the number of lines of the spray orifices in the distribution orifice plates 132 is an integral multiple of the number of lines of the side-by-side heat exchange tube bundles 142. The row of side-by-side heat exchange tube bundles 142 close to the distribution orifice plates 132 is arranged directly facing the spray orifices in the distribution orifice plates 132, that is, gas sprayed from the spray orifices in the distribution orifice plates 132 is precisely jetted onto a central axis of each tube of the side-by-side heat exchange tube bundles 142 or uniformly jetted onto side walls of the side-by-side heat exchange tube bundles. A distance between a tube wall of the row of side-by-side heat exchange tube bundles 142 close to the distribution orifice plates 132 and the distribution orifice plates 132 is in a range from 5 mm to 30 mm. Upper ends and lower ends of the side-by-side heat exchange tube bundles 142 are respectively connected with the tubular upper header 141 and the tubular lower header 143. The burner 1 may be a single burner, or the two identical burners may be arranged in an axisymmetric or centrosymmetric manner. The burner 1 of solution 1 and solution 2 uses an integrated burner 1 with gas exhaust on two sides, referring to Fig. 3c, the burner 1 may also use two burners 1 with gas exhaust one side arranged side by side in the same or opposite directions, as shown in Fig. 1b, Fig. 3b, and Fig. 3d.

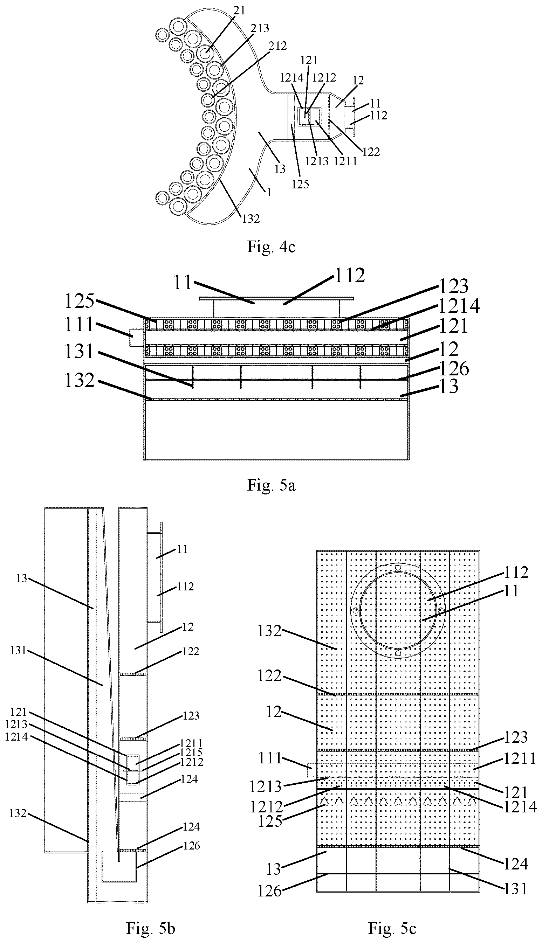

Referring to Fig. 1c, Fig. 1d, and Fig. 4, the burner 1 in solution 3 and solution 4 includes a burner inlet 11, a first distribution chamber 12, a first flow-equalizing orifice plate 122, an inner-ring heat exchange tube bundle 212, an outer-ring heat exchange tube bundle 213, a sealing plate 22, a gap deflector 23, and an ignition needle 15. The burner inlet 11 is a cylinder body, the cylinder body is an open cylindrical or square shape, a flange is welded to one end of the cylinder body, a flange side of the burner inlet 11 is connected with the fan 7, a cylinder body in a form of circle to rectangle or square to rectangle, as well as a rectangular cylinder body are sequentially welded to the other end of the burner inlet 11, a crescent-shaped cylinder body is welded to a rear end of the rectangular cylinder body, the cylinder body in the form of circle to rectangle or square to rectangle is connected with the rectangular cylinder body to form the first distribution chamber 12, the crescent-shaped cylinder body encloses the second distribution chamber 13, and the flow-equalizing orifice plate may be disposed between the first distribution chamber 12 and the second distribution chamber 13. An arc-shaped distribution orifice plate 132 is disposed on an inner arc surface of the second distribution chamber 13, spray orifices are uniformly distributed on the distribution orifice plate 132, the spray orifices are circular, and diameters of the circular spray orifices are less than 4 mm. The uniformly-arranged outer-ring heat exchange tube bundles 213 and the uniformly-arranged inner-ring heat exchange tube bundles 212 are sequentially arranged behind the distribution orifice plate 132, diameters of the outer-ring heat exchange tube bundles 213 are greater than diameters of the inner-ring heat exchange tube bundles 212, a gap formed between adjacent tubes of the outer-ring heat exchange tube bundles 213 is in a range from 2 mm to 5 mm, and a gap formed between adjacent tubes of the inner-ring heat exchange tube bundles 212 is in a range from 4 mm to 10 mm. The outer-ring heat exchange tube bundles 213 and the inner-ring heat exchange tube bundles 212 are arranged in a staggered manner. The number of lines of the outer-ring heat exchange tube bundles 213 is the same as the number of lines of spray orifices in the distribution orifice plate 132, or the number of lines of the spray orifices in the distribution orifice plate 132 is an integral multiple of the number of lines of the outer-ring heat exchange tube bundles 213. The outer-ring heat exchange tube bundles 213 directly face the spray orifices in the distribution orifice plate 132, that is, the gas sprayed from the spray orifices in the distribution orifice plate 132 is precisely jetted onto a central axis of each tube of the outer-ring heat exchange tube bundles 213 or uniformly jetted onto side walls of the outer-ring heat exchange tube bundles. Upper ends and lower ends of both the outer-ring heat exchange tube bundles 213 and the inner-ring heat exchange tube bundles 212 are respectively connected with the annular upper header 211 and the annular lower header 215.

Referring to Fig. 1a, Fig. 1b, Fig. 2a, and Fig. 2b, the heat exchanger 2 in solution 1 and solution 2 includes an arc-shaped heat exchange section 21, a sealing plate 22, a gap deflector 23, a furnace upper baseplate 24, a furnace lower baseplate 25, a housing baffle 26, a sealing tube 28, and a communicating tube 29. The arc-shaped heat exchange section 21 includes an annular upper header 211, an inner-ring heat exchange tube bundle 212, an outer-ring heat exchange tube bundle 213, a downcomer 214, an annular lower header 215, an annular header water inlet 216, an annular header steam outlet 217, and a pollutant drainage outlet 218.

Referring to Fig. 1c, Fig. 1d, Fig. 1e, Fig. 2c, Fig. 2d, and Fig. 2e, the heat exchanger 2 in solution 3, solution 4 and solution 5 includes a planar heat exchange section 14, an annular upper header 211, an inner-ring heat exchange tube bundle 212, an outer-ring heat exchange tube bundle 213, a downcomer 214, an annular lower header 215, an annular header water inlet 216, an annular header steam outlet 217, a sealing plate 22, a gap deflector 23, a furnace upper baseplate 24, a furnace lower baseplate 25, a radiation heating tube bundle 27, and a sealing tube 28. The planar heat exchange section 14 includes a tubular upper header 141, a side-by-side heat exchange tube bundle 142, a tubular lower header 143, a tubular header water inlet 144, and a tubular header steam outlet 145. The inner-ring heat exchange tube bundle 212 and the outer-ring heat exchange tube bundle 213 on two arc sides in solution 3 are both water-cooled tube bundles of the burner. The inner-ring heat exchange tube bundle 212 and the outer-ring heat exchange tube bundle 213 on one arc side in solution 4 and solution 5 are water-cooled tube bundles of the burner, while the inner-ring heat exchange tube bundle 212 and the outer-ring heat exchange tube bundle 213 on the other arc side are heat exchange tube bundles. The two parallel side-by-side heat exchange tube bundles 142 are disposed, and a gap in a range from 50 mm to 300 mm is disposed between the tube banks. For solution 3, one ends of the two side-by-side heat exchange tube bundles 142 are sealed with the sealing plates 22, and the other ends of the two side-by-side heat exchange tube bundles are the flues 3; or, the two sides of the two side-by-side heat exchange tube bundles 142 are both the flues 3. For solution 4 and solution 5, the two ends of the two side-by-side heat exchange tube bundles 142 are both sealed with the sealing plates 22.

Referring to Fig. 1a, Fig. 1b, Fig. 1c, Fig. 1d, Fig. 1e, Fig. 2a, Fig. 2b, Fig. 2c, Fig. 2d, and Fig. 2e, in five solutions, the radiation heating tube bundle 27 may be arranged in the furnace or the radiation heating tube bundle 27 may be not arranged in the furnace. Half turn of the radiation heating tube bundles 27 are respectively arranged in the two semi-cylindrical furnace spaces, the radiation heating tube bundles 27 are concave inwards at one circumference, and each divided into three sections: an upper inclined section, a middle vertical section, and a lower inclined section, the three sections are located on the same plane, the upper inclined sections and the lower inclined sections face the same direction, tops of the radiation heating tube bundles 27 are connected with an inner side or a top of the annular upper header 211, and bottoms of the radiation heating tube bundles 27 are connected with an inner side or a bottom of the annular lower header 215. The radiation heating tube bundles 27 are uniformly arranged in a circumferential direction, and 2-5 radiation heating tube bundles 27 on two sides of the burner 1 decrease lengths of the upper inclined sections and lower inclined sections.

The annular header water inlet 216 is located below a steam-water boundary on a side surface or at a bottom of the annular upper header 211, an annular header steam outlet 217 is located above the steam-water boundary on the side surface or at a top of the annular upper header 211, and a pollutant drainage outlet 218 is located in a side surface or a bottom of the annular lower header 215. The vertical cross sections of the annular upper header 211 and the annular lower header 215 are rectangles with chamfered on all sides, circles, or ellipses, a height of the annular upper header 211 is in a range from 0.4 m to 0.8 m, and a height of the annular lower header 215 is in a range from 0.2 m to 0.4 m. 2-3 circles of vertical heat exchange tube bundles are disposed between the annular upper header 211 and the annular lower header 215, the inner-ring heat exchange tube bundle 212 is a plain tube, a spiral finned tube or an extended surface tube, when the inner-ring heat exchange tube bundle 212 is the spiral finned tube, a height of a fin is less than 10 mm, and when the inner-ring heat exchange tube bundle 212 is the extended surface tube, a height of an extended surface is less than 10 mm; and the outer-ring heat exchange tube bundle 213 is a reinforced heat exchange tube bundle of the spiral finned tube, the extended surface tube, or the special-shaped tube, and the height of the fin or the extended surface may be in a range from 30 mm to 100 mm. The furnace upper baseplate 24 is tightly welded to the bottom of the annular upper header 211, and the furnace lower baseplate 25 is tightly welded to the top of the annular lower header 215; a steam-water separator and a plurality of flange interfaces are arranged on the annular upper header 211 for water inlet, steam exhaust, maintenance, and installation of a pressure gauge, a temperature gauge, a water level gauge, and a safety valve; and a plurality of flange interfaces are arranged on the annular lower header 215 for maintenance, pollutant drainage, and temperature and pressure measurement. In the five solutions, 1-2 rows of plain tubes, spiral finned tubes, special-shaped tubes, and(or) deflectors may be additionally arranged at the side-by-side heat exchange tube bundle 142 to reinforce heat exchange. A gap deflector 23 with a herringbone, V-shaped or triangular cross section is disposed between two adjacent heat exchange tubes of the outer-ring heat exchange tube bundle 213, and the gap deflector 23 is located on an inner side of the outer-ring heat exchange tube bundle 213, with a tip facing the outer side. Alternatively, a gap deflector 23 with a herringbone, V-shaped or triangular cross section is disposed between two adjacent heat exchange tubes of the inner-ring heat exchange tube bundle 212, the gap deflector 23 is located on an outer side of the inner-ring heat exchange tube bundle 212, with a tip facing the inner side. Alternatively, the gap deflectors 23 are arranged in both the outer-ring heat exchange tube bundle 213 and the inner-ring heat exchange tube bundle 212. The two heat exchange tubes at two ends of the inner-ring heat exchange tube bundle 212 and the outer-ring heat exchange tube bundle 213 are both disposed as plain tubes, sealing tubes 28 are disposed at the tangent position with the tube bundles at the two ends of the side-by-side heat exchange tube bundle 142, the sealing tubes 28 are the plain tubes, and tops and bottoms of the sealing tubes 28 are bent to be connected with the annular upper header 211 and the annular lower header 215. A longitudinal gap between the two plain tubes at the same end of the inner-ring heat exchange tube bundle 212 and the outer-ring heat exchange tube bundle 213 and the sealing tube 28 is sealed by using a sealing plate 22. The sealing plate 22, the housing baffle 26, and the sealing tube 28 surround the side-by-side heat exchange tube bundle 142, the inner-ring heat exchange tube bundle 212, the outer-ring heat exchange tube bundle 213, and the radiation heating tube bundle 27 to form a heating region. A downcomer 214 is disposed in a peripheral region that is not heated or less heated, so as to form a natural circulation steam boiler. When the downcomer 214 is not disposed, a through-flow type steam or hot water boiler is formed. The side-by-side heat exchange tube bundle 142, the inner-ring heat exchange tube bundle 212, the outer-ring heat exchange tube bundle 213, and the sealing tube 28 are all connected with the header using a necking technology. Refractory mortar is disposed on the outer side of the tubular upper header 141, the outer side of the tubular lower header 143, the bottom of the annular upper header 211, the top of the annular lower header 215, the bottom of the furnace upper baseplate 24, the top of the furnace lower baseplate 25, and a necking position of the tube bundle. Heat Insulating materials are disposed on the inner side or the outer side of the housing baffle 26, the annular upper header 211, the annular lower header 215, the furnace upper baseplate 24, the furnace lower baseplate 25, and the outer side of the flue 3. The flue 3 includes a flue gas header 31, a flue gas conduit 32, and a flue outlet 33. The flue gas header 31 is a cavity with a rectangular cross section or a cavity with a circular cross section. Referring to Fig. 1a, Fig. 1b, Fig. 2a and Fig. 2b, in solution 1 and solution 1, double flues are provided, the two flue gas headers 31 are connected via the flue gas conduit 32, and flue gas in the two flue gas headers 31 is collected through the flue gas conduit 32 and then discharged out of a boiler body from the flue outlet 33. Referring to Fig. 1c, Fig. 1d, Fig. 1e, Fig. 2c, Fig. 2d and Fig. 2e, in solution 3, solution 4 and solution 5, a single flue is provided, and the flue gas in the flue gas header 31 is directly discharged out of the boiler body from the flue outlet 33. The flue outlet 33 is directly connected with the economizer 4 through a flange, or the flue outlet 33 is tightly connected with the economizer 4 through a flange after turning. A flue gas inlet end of the flue gas header 31 is tightly connected with the housing baffle 26, the annular upper header 211, and the annular lower header 215. In solution 1, solution 2, solution 4 and solution 5, the flue gas inlet end of the flue gas header 31 is tightly connected with the housing baffle 26. Referring to Fig. 1c and Fig. 2c, in solution 3, the flue gas inlet end of the flue gas header 31 penetrates through the housing baffle 26, an outer side wall of the cavity at the flue gas inlet end is tightly connected with the housing baffle 26, and a tail end of the cavity of the flue gas header 31 is tightly connected with two water-cooled tubes on one side of the side-by-side heat exchange tube bundle 142. A farthest distance between the tubular upper header 141 and the tubular lower header 143 is less than a distance between the bottom of the annular upper header 211 and the top of the annular lower header 215. A tubular header steam outlet 145 and a tubular header water inlet 144 are respectively formed in two ends of the tubular upper header 141 and the tubular lower header 143 in an axis direction, the tubular header steam outlet 145 and the tubular header water inlet 144 are connected with a communicating tube 29 through a flange, and the burner 1 is detachable as a whole. Alternatively, the farthest distance between the tubular upper header 141 and the tubular lower header 143 is greater than the distance between the bottom of the annular upper header 211 and the top of the annular lower header 215, and the two axis ends of the tubular upper header 141 and the tubular lower header 143 respectively communicate with the annular upper header 211 and the annular lower header 215, with connecting parts being an inner side surface or the top of the annular upper header 211 and an inner side surface or the bottom of the annular lower header 215. At this point, the communicating tube 29 is not needed, and the burner 1 is partially detachable, wherein the tubular upper header 141, the side-by-side heat exchange tube bundle 142, and the tubular lower header 143 cannot be pulled out, and the remaining parts of the burner 1 can be pulled out and disassembled; or the burner 1 is non-detachable. The pull-out part of the burner 1 is connected and sealed with the annular upper header 211, the annular lower header 215, the furnace upper baseplate 24, the furnace lower baseplate 25, and the housing baffle 26 in a drawer manner. The burner is placed into the furnace through an opening of the housing baffle 26 and is fixed under the constraint of a preset guide rail in the furnace. The communicating tube 29 is a 180° bent tube, one end of the communicating tube is tightly connected with the flange on the tubular upper header 141 or the tubular lower header 143, and the other end of the communicating tube communicates with the outer side of the annular upper header 211 or the annular lower header 215. Plate pieces such as the first flow-equalizing orifice plate 122, the distribution orifice plate 132, the sealing plate 22, the furnace upper baseplate 24, the furnace lower baseplate 25, and the housing baffle 26 are all made of materials that are resistant to high temperature and deformation. A working medium of the boiler may be organic media such as water or heat conducting oil. Tube bundle surfaces of the side-by-side heat exchange tube bundle 142, the inner-ring heat exchange tube bundle 212, and the radiation heating tube bundle 27 in direct contact with high-temperature flue gas are processed by spraying a nickel-chromium alloy. In solution 1 and solution 2, the distribution orifice plate 132 and the side-by-side heat exchange tube bundle 142 may be correspondingly disposed as a plane, concave curved surface, convex curved surface or folded plate surface. One or two ignition needles 15 are arranged on each burning surface, the ignition needle 15 may extend into the furnace from the side surface, the top, or the bottom of the furnace. The ignition needles 15 correspondingly penetrate through the sealing plate 22, the furnace upper baseplate 24 or the furnace lower baseplate 25 to extend into the furnace. A minimum distance between the ignition needle 15 and an outer wall of the side-by-side heat exchange tube bundle 142 or an outer wall of the inner-ring heat exchange tube bundle 212 is in a range from 10 mm to 50 mm. The furnace upper baseplate 24 and the furnace lower baseplate 25 are each in a shape of circular plate. The furnace upper baseplate 24 is tightly welded to the bottom or the inner side surface of the annular upper header 211, and the furnace lower baseplate 25 is tightly welded to the top or the inner side surface of the annular lower header 215. Notches for allowing the side-by-side heat exchange tube bundle 142 and the radiation heating tube bundle 27 to penetrate are correspondingly reserved on surfaces of the furnace upper baseplate 24 and the furnace lower baseplate 25, and the notches are sealed with refractory mortar.

Referring to Fig. 1e, Fig. 2e, Fig. 5a, Fig. 5b, Fig. 5c, Fig. 6a, Fig. 6b, Fig. 6c, Fig. 6d, and Fig. 6e, the burner 1 of solution 5 includes a burner inlet 11, a first distribution chamber 12, a second distribution chamber 13 and a water-cooled tube bundle composed of a tube bundle of a planar heat exchange section 14. The burner inlet 11 includes a gas inlet 111 and an air inlet 112. The first distribution chamber 12 includes a gas distribution tube (121), a first flow-equalizing orifice plate 122, a second flow-equalizing orifice plate 123, a third flow-equalizing orifice plate 124, a spoiler column 125, and a turning deflector 126. The gas distribution tube 121 includes a first gas distribution tube 1211 and a second gas distribution tube 1212. The first gas distribution tube 1211 is provided with a first gas spray orifice 1213, the second gas distribution tube 1212 is provided with a second gas spray orifice 1214, and the second distribution chamber 13 includes a partition board 131 and a distribution orifice plate 132. The burner 1 is a cuboid as a whole, the air inlet 112 is formed in a wide surface of the cuboid, and the gas inlet 111 is formed in a narrow surface of the cuboid. Gas enters the gas distribution tube 121 from the gas inlet 111, and air enters the first distribution chamber 12 from the air inlet 112. The first distribution chamber 12 may be in a shape of cuboid, sequentially passes through the first flow-equalizing orifice plate 122, the second flow-equalizing orifice plate 123, and the outer side of the gas distribution tube 121, and then mixes with the gas sprayed from the second gas spray orifice 1214. Mixed gas passes through the spoiler column 125, the third flow-equalizing orifice plate 124 and the turning deflector 126, then enters the second distribution chamber 13, and enters the water-cooled tube bundle of the burner under the action of the partition board 131 and the distribution orifice plate 132. The air inlet 112 may be circular or square, the gas distribution tube 121 may be a circular tube or a square tube, and the first gas spray orifice 1213 and the second gas spray orifice 1214 may be circular holes, square holes, or triangular holes. Preferably, two rows of staggered holes are formed in the top and the bottom of the second gas distribution tube 1212. Spray orifices of various shapes and arrangement manners are formed in the first flow-equalizing orifice plate 122, the second flow-equalizing orifice plate 123, the third flow-equalizing orifice plate 124, and the distribution orifice plate 132. The third flow-equalizing orifice plate 124 is disposed at the tail of the first distribution chamber 12, the turning deflector 126 is connected with the third flow-equalizing orifice plate 124, the distribution orifice plate 132 directly faces the planar heat exchange section 14, and the partition board 131 is disposed to separate the second distribution chamber and change a flow area of the second distribution chamber 13 at the same time. The partition board 131, the second flow-equalizing orifice plate 123, and the distribution orifice plate 132 enclose the second distribution chamber 13. 3-50 spoiler columns 125 are uniformly disposed behind the gas distribution tube 121 in an axial direction of the gas distribution tube 121, two ends of the spoiler columns 125 are welded to an inner wall surface of the first distribution chamber 12, and the spoiler columns 125 are cylindrical with cross sections of triangles, inverted triangles, squares or circles. The turning deflector 126 forms turning of 180° with a cross section of a right-angle "U" shape and a smooth-transition "U" or "V" shape. A cross section of the second distribution chamber 13 is rectangular or trapezoidal, 1-10 partition boards 131 parallel to a mixed gas flow direction are arranged inside the second distribution chamber 13, tops of the partition boards 131 may be connected with or may be not connected with the top of the second distribution chamber 13, bottoms of the partition boards 131 and the top of the distribution orifice plate 132 may be connected or not connected, and left and right ends of the partition boards 131 may be respectively connected with or may not be connected with the turning deflector 126 and the end of the second distribution chamber 13. The distribution orifice plate 132 is disposed at the tail of the second distribution chamber 13, and 1-3 layers of distribution orifice plates 132 may be disposed. A flow area in the first distribution chamber 12 in a gas inlet direction remains unchanged or gradually decreases, and a flow area in the second distribution chamber 13 in the mixed gas flow direction remains unchanged or gradually decreases. The gas flow direction in the first distribution chamber 12 and the second distribution chamber 13 may be opposite, perpendicular, or in other angles, and the corresponding turning deflector 126 forms turning of 180° or 90° or other angles. The turning angle of the turning deflector 126 is set by those ordinarily skilled in the art according to their needs. The burner 1 may be a low/zero-carbon fuel burner, low/zero-carbon fuel may share a premix with natural gas, or the low/zero-carbon fuel and the natural gas respectively blend with air.

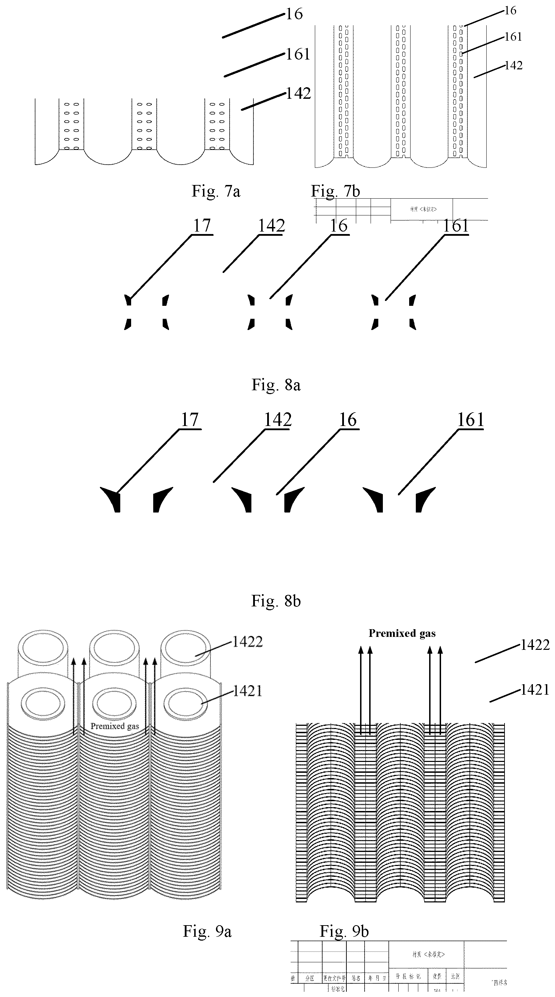

Referring to Fig. 7a, Fig. 7b, Fig. 8a, and Fig. 8b, the water-cooled tube bundle at the head of the burner 1 is a membrane-type wall tube bundle, and a membrane-type wall surface may be a flat surface, a bending surface or an arc-shaped surface. The two adjacent plain tubes are welded together through flat steel, the flat steel is provided with regular premixed gas spray orifices from bottom to top, center lines of the spray orifices are perpendicular to or inclined to an inner plane or an outer plane of the flat steel to form different degrees of high-temperature flue gas reflow regions on the furnace surface. An airflow sprayed by the premixed gas forms built-in flue gas recirculation around a spray nozzle outlet to reduce NO*ₓ*.

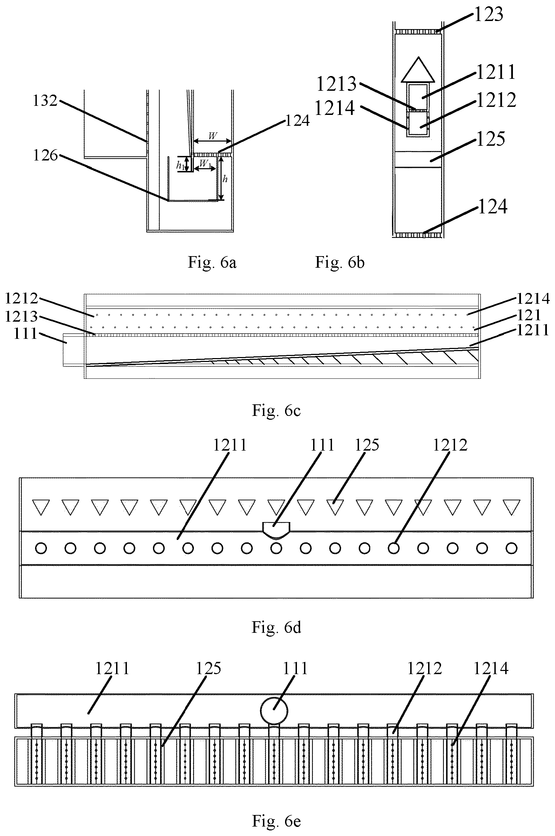

Referring to Fig. 5a, Fig. 5b, and Fig. 6b, a triangular or "V"-shaped spoiler column 125 is disposed at the front end of the gas distribution tube 121, a cross section of the spoiler column 125 is parallel to a cross section of the first gas distribution tube 1211, and a width of the cross section of the spoiler column 125 may be greater than, equal to, or less than a width of the cross section of the gas distribution tube 121. The gas inlet 111 is located at one or two ends of the first gas distribution tube 1211, and gas enters along one or two axial ends of the first gas distribution tube 1211. The air inlet 112 is located at the front end of the first distribution chamber 12, and the first gas distribution tube 1211 and the second gas distribution tube 1212 are connected in the air flow direction. First gas spray orifices 1213 are uniformly formed in an interface between the first gas distribution tube 1211 and the second gas distribution tube 1212, and second gas spray orifices are uniformly formed in the top and the bottom surface of the second gas distribution tube 1212. 1-8 rows of first gas spray orifices 1213 are provided, 1-4 rows of second gas spray orifices 1214 are disposed, and the first gas spray orifices 1213 and the second gas spray orifices 1214 may be arranged in line or in a staggered manner. Spoilers 1215 are welded to a top and a bottom of an interface between the first gas distribution tube 1211 and the second gas distribution tube 1212.

Referring to Fig. 4a, Fig. 4b, and Fig. 4c, different from solution 1 and solution 2, the burner 1 in solution 3 and solution 4 includes a burner inlet 11, a first distribution chamber 12, a second distribution chamber 13, and a water-cooled tube bundle consisting of an arc-shaped heat exchange section 21.

Referring to Fig. 5a and Fig. 5c, when mixed gas enters parallel to the distribution orifice plate 132, 1-10 vertical partition boards parallel to the mixed gas flow direction are disposed in the second distribution chamber 13 in a direction perpendicular to the mixed gas flow direction, front edges of the vertical partition boards are connected with a top of the second distribution chamber 13, rear edges of the vertical partition boards are connected with the distribution orifice plate 132 or spaced apart from the distribution orifice plate 132 by 5-20 mm, and top ends and bottom ends of the vertical partition boards are respectively connected to a top surface and a bottom surface of the second distribution chamber 13.

Referring to Fig. 5b and Fig. 6a, in the turning deflector 126, 0<W₁<W, 0≤h₁<h, and a connection position of the turning deflector 126 and the third flow-equalizing orifice plate 124 may be adjusted.

The first flow-equalizing orifice plate 122, the second flow-equalizing orifice plate 123, the third flow-equalizing orifice plate 124, the distribution orifice plate 132, the sealing plate 22, the furnace upper baseplate 24, the furnace lower baseplate 25, and the housing baffle 26 are all made of materials that are resistant to high temperature and deformation, and tube bundle surfaces of the side-by-side heat exchange tube bundle 142, the inner-ring heat exchange tube bundle 212, and the radiation heating tube bundle 27 in direct contact with high-temperature flue gas are processed by spraying a nickel-chromium alloy. The burner 1 is a natural gas burner, a natural gas blended low/zero-carbon fuel burner, or a pure low/zero-carbon fuel burner, and a working medium of the heat exchanger 2 is water or heat conducting oil.

Each flow equalization and disturbance components inside the burner 1 may be appropriately added, omitted, or changed in their disposing positions according to different working conditions.

Referring to Fig. 6d and Fig. 6e, the first gas distribution tube 1211 may also be placed parallel to an exterior of the first distribution chamber 12, one ends of 3-20 uniformly-arranged second gas distribution tubes 1212 vertically communicate with the first gas distribution tube 1211, and the other ends of the second gas distribution tubes extend into the first distribution chamber 12. The gas inlet(s) 111 is/are located at one end, two ends or a middle of the first gas distribution tube 1211, 1-3 gas inlets 111 are provided, and the second gas distribution tubes 1212 are provided with the uniformly-arranged second gas spray orifices 1214 in an air incoming direction or away from the air incoming direction or in both directions.

Referring to Fig. 4a, Fig. 4b and Fig. 4c, when the burner 1 is disposed on the arc sides of the semi-cylindrical furnaces, one or two single-sided burners are arranged with an outer-ring heat exchange tube bundle 213 and an inner-ring heat exchange tube bundle 212 as water-cooled tube bundles, a front end of a cross section of the burner 1 is square, a rear end is crescent-shaped, and a distribution orifice plate 132 is arc-shaped; a diameter of the outer-ring heat exchange tube bundle 213 is greater than a diameter of the inner-ring heat exchange tube bundle 212, a gap formed between adjacent tubes of the outer-ring heat exchange tube bundle 213 is in a range from 2 mm to 5mm, and a gap formed between adjacent tubes of the inner-ring heat exchange tube bundle 212 is in a range from 4 mm to 10 mm; and the number of lines of the outer-ring heat exchange tube bundle 213 is the same as the number of lines of spray orifices in the distribution orifice plate 132, or the number of lines of the spray orifices in the distribution orifice plate 132 is an integral multiple of the number of lines of the outer-ring heat exchange tube bundle 213, and the outer-ring heat exchange tube bundle 213 directly faces the spray orifices in the distribution orifice plate 132.

Referring to Fig. 3, Fig. 4, and Fig. 5, the mixed gas of gas and air inside the burner 1 may enter perpendicular to the distribution orifice plate 132 or parallel to the distribution orifice plate 132. When the mixed gas enters perpendicular to the distribution orifice plate 132, the turning deflector 126 is not disposed. The mixed gas flow direction in the first distribution chamber 12 is the same as a mixed gas spray direction in the second distribution chamber 13. When the mixed gas enters parallel to the distribution orifice plate 132, the turning deflector 126 may or may not be disposed, and the mixed gas flow direction in the first distribution chamber 12 is perpendicular to the gas spray direction in the second distribution chamber 13. The turning deflector 126 is located at a junction of the first distribution chamber 12 and the second distribution chamber 13, two sides of the turning deflector 126 are connected with two sides of the first distribution chamber 12 and the second distribution chamber 13, and a cross section is in a right angle "U" shape, a smooth transition "U" shape, a "V" shape, an "L" shape or a linear shape. When the turning deflector 126 is in the linear shape, the turning deflector 126 is fixedly connected or hinged with the third flow-equalizing orifice plate 124. In a case of hinging, the turning deflector may rotate by 180°.

Referring to Fig. 5a and Fig. 5b, when the mixed gas enters parallel to the distribution orifice plate 132, 1-10 partition boards parallel to the mixed gas flow direction are disposed in the second distribution chamber 13 in a direction perpendicular to the mixed gas flow direction, tops of the vertical partition boards are connected with the top of the second distribution chamber 13, bottoms of the vertical partition boards are connected with the top of the distribution orifice plate 132 or spaced apart from the distribution orifice plate by 5-20 mm, and two ends of the vertical partition boards are respectively connected to a front end and a tail end of the second distribution chamber 13.

Referring to Fig. 7a, Fig. 7b, Fig. 8a and Fig. 8b, the water-cooled tube bundle at the head of the burner 1 is a membrane-type wall tube bundle, the membrane-type wall tube bundle is a tube bundle of a planar heat exchange section 14 and an arc-shaped heat exchange section 21, and a membrane-type wall surface is a flat surface, an arc-shaped surface or a bending surface. The adjacent two plain tubes are welded by flat steel 16, a length direction of the flat steel 16 is parallel to a plain tube bank, the flat steel 16 is located on or deviates from a center line of the plain tube bank, and the flat steel 16 is correspondingly welded on both sides or one sides to the plain tubes. A thickness of the flat steel 16 is in a range from 3 mm to 20 mm, a weld penetration of an arc-shaped surface of the flat steel 16 in contact with the plain tubes in a thickness direction is at least 3 mm, and a weld seam 17 is subjected to 100% full penetration connection. The flat steel 16 is provided with regular premixed gas spray orifices 161 from bottom to top, center lines of the premixed gas spray orifices are perpendicular to or inclined to the flat steel 16, a single line, two lines or three lines premixed gas spray orifices may be provided from bottom to top, and when more than one line of premixed gas spray orifices are provided, the adjacent two lines of spray orifices are arranged facing each other or staggered, and the premixed gas spray orifices are of circular, obround, triangular or rectangular spray orifice structures. Long axes of the obround premixed gas spray orifices are parallel to or perpendicular to longitudinal center lines of the tubes, top angles of the triangular premixed gas spray orifices have a rotating angle of 360°, which means that the triangle may be placed in an upright, reverse, or inclined manner, and long sides of the rectangular premixed gas spray orifices are parallel to or perpendicular to the longitudinal center lines of the tubes.

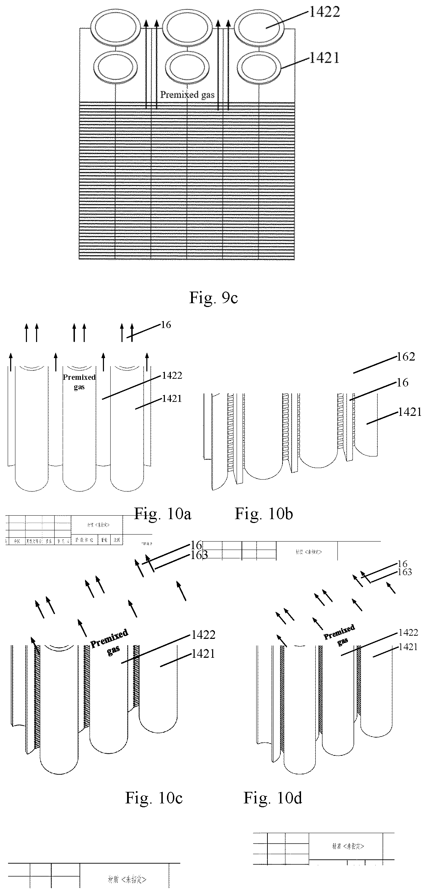

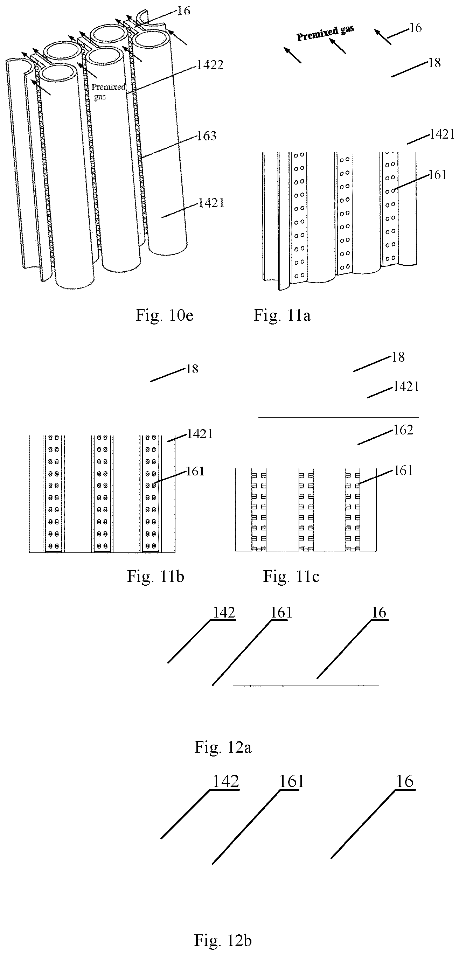

Referring to Fig. 10a, Fig. 10b, Fig. 10c, and Fig. 10d, a length direction of the flat steel 16 at the head of the burner 1 is perpendicular to the plain tube bank, the flat steel 16 is located between the two adjacent plain tubes, the head of the burner 1 is provided with at least two rows of plain tubes, the flat steel 16 is welded to the first row of plain tubes 1421 so as to form a narrow gap between the second row of plain tubes 1422, and uniformly-arranged flat steel fins 163 with cambered surfaces or rectangular surfaces may be welded to the flat steel 16. Cushion blocks 162 are uniformly welded on the flat steel 16, cross sections of the cushion blocks 162 are square, circular, or obround. The cushion blocks 162 are welded to the plain tubes in this row, thus the uniformly-arranged premixed gas spray nozzles are formed between the plain tubes, the cushion blocks 162 and the flat steel 16, and the head of the burner 1 is provided with at least one row of plain tubes. The adjustable spray orifice baffle 18 is used to partially block the premixed gas spray orifices 161 or the spray nozzles formed in the cushion blocks 162, the adjustable spray orifice baffle 18 is provided with spray orifice nozzles of the same size and position as the premixed gas spray orifices or the cushion block spray nozzles, the adjustable spray orifice baffle 18 slides in an axial direction of a membrane-type wall tube, and a sliding range is able to cover the premixed gas spray orifices 161 or the spray nozzles formed in the cushion blocks 162, as shown in Fig. 11a, Fig. 11b, and Fig. 11c.

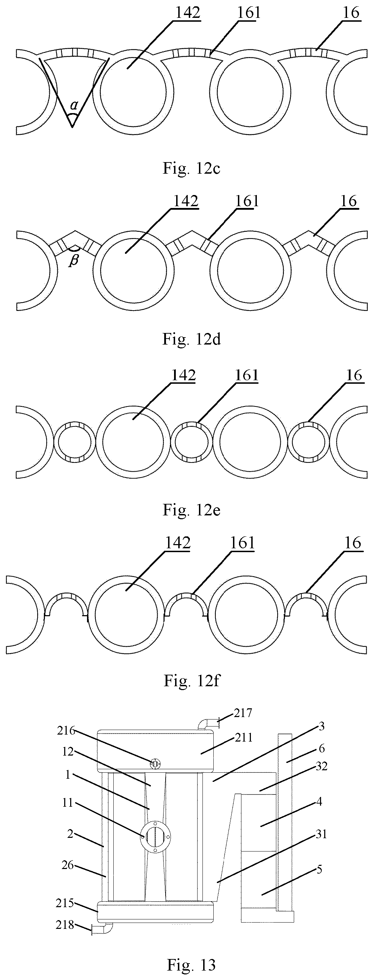

Referring to Fig. 9a, Fig. 9b, Fig. 9c, Fig. 12a, Fig. 12b, Fig. 12c, Fig. 12d, Fig. 12e, and Fig. 12f, the flat steel 16 at the head of the burner 1 may be channel steel, a steel I-beam, arc steel, angle steel, a small circular tube or a semi-circular tube. When the flat steel is the arc steel, radian *α* of the arc steel is 0<*α*<π, and when the flat steel is the angle steel, an included angle β of the angle steel is 0<β<180°. The water-cooled tube bundle at the head of the burner 1 may also be a combination of finned tubes and plain tubes, the finned tubes are bent or not bent on opposite sides, and the plain tubes laterally face the furnace or face away from the furnace. The finned tubes are spiral finned tubes, circular finned tubes, square finned tubes or H-shaped finned tubes.

Referring to Fig. 2a, Fig. 2b, Fig. 2d or Fig. 2e, one or two ignition needles 15 are arranged on each burning surface, the ignition needle 15 is able to extend into a furnace from a side surface, a top or a bottom of the furnace, the ignition needle 15 correspondingly penetrates through a sealing plate 22 or a furnace upper baseplate 24 or a furnace lower baseplate 25 to extend into the furnace, and the ignition needle 15 is 10-50 mm away from an outer wall of a side-by-side heat exchange tube bundle 142 or an outer wall of an inner-ring heat exchange tube bundle 212.

Referring to Fig. 1a, Fig. 1b, Fig. 3a, Fig. 3b, Fig. 3c and Fig. 3d, when the burner is disposed on the chord sides of the semi-cylindrical furnaces, one double-sided burner or two single-sided burners are arranged with a side-by-side heat exchange tube bundle as a water-cooled tube bundle, and a flow area of the burner from a burner inlet to a burner end gradually decreases; when one double-sided burner is arranged, gas enters the burner on one side in a direction where semi-cylindrical furnace chords are located, and exits on two sides in a direction perpendicular to a gas inlet direction, and the burner is axisymmetric in the direction perpendicular to the gas inlet direction; and when the two single-sided burners are arranged, the gas enters the burner on the two sides or one side in the direction where the semi-cylindrical furnace chords are located, and exits on the two sides in the direction perpendicular to the gas inlet direction, and the burner is centrosymmetric or axisymmetric.

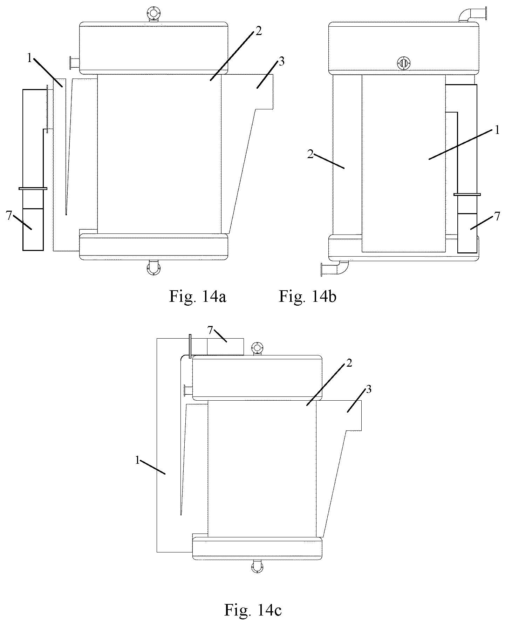

Referring to Fig. 1a, Fig. 1b, Fig. 1c, Fig. 1d, Fig. 1e, Fig. 13, Fig. 14a, Fig. 14b and Fig. 14c, the flue 3 includes flue gas headers 31, a flue gas conduit 32 and a flue outlet 33, when the burner 1 is disposed on the chord sides of the semi-cylindrical furnaces, double flues are provided, the two flue gas headers 31 are connected through the flue gas conduit 32, and flue gas in the two flue gas headers 31 is collected through the flue gas conduit 32 and then discharged from the flue outlet 33; when the burner 1 is disposed on the arc sides of the semi-cylindrical furnaces, a single flue is provided, and the flue gas in the flue gas headers 31 is directly discharged from the flue outlet 33; the flue outlet 33 sequentially communicates with the economizer 4, the condenser 5 and the chimney 6. An outlet of the fan 7 communicates with any surface on the front, left, right, and upper portion of the burner 1, and a narrow surface of the fan 7 is parallel to a connection surface of the burner 1.

The gas and the air enter the burner 1 from the gas inlet 111 and the air inlet 112 respectively for flow equalizing and mixing, and are ignited and burned in the furnace space enclosed by the burner 1, the heat exchanger 2, the flue 3, and the housing baffle 26. High-temperature flue gas generated by burning exchanges heat with the side-by-side heat exchange tube bundle 142, the radiation heating tube bundle 27, the inner-ring heat exchange tube bundle 212, and the outer-ring heat exchange tube bundle 213, is then collected and discharged from the flue 3 and enters the economizer 4 and the condenser 5 for further heat exchange. The flue gas is then discharged from the chimney 6. Water is first pumped into the condenser 5 and the economizer 4 by a water pump, absorbs sensible heat and latent heat from the flue gas before entering a water replenishing port of the annular upper header 211. Cold water enters the annular lower header 215 through the downcomer 214, and the water in the annular lower header 215 enters the annular upper header 211 through the inner-ring heat exchange tube bundle 212, the outer-ring heat exchange tube bundle 213, or the radiation heating tube bundle 27, or sequentially enters annular upper header 211 through the tubular lower header 143, the side-by-side heat exchange tube bundle 142, and the tubular upper header 141. The water in the inner-ring heat exchange tube bundle 212, the outer-ring heat exchange tube bundle 213, the radiation heating tube bundle 27, and the side-by-side heat exchange tube bundle 142 absorbs furnace radiation heat and flue gas convection and exchange heat, the water temperature rises and generates steam, the steam enters the annular upper header 211, and discharged from the steam outlet, and the steam is supplied to a user for use, so as to form a natural circulation boiler at this point. Alternatively, the downcomer 214 is not provided, the cold water directly enters through the water replenishing port in the annular lower header 215, enters the heating tube bundle to absorb heat, and then enters the annular upper header 211, and the generated steam or hot water is supplied to the user for use. At this time, it is a through-flow boiler.

In summary, the vertical water tube built-in premixed membrane-type wall-cooling burning gas boiler described in the present invention includes a burner "furnace", a heat exchanger "pot", the flue, the economizer, the condenser, the chimney, and supporting boiler accessories such as the fan, the water pump, the gas valve group, and the controller. The burner and heat exchanger, or the heat exchanger and the burner, are enclosed to form the two axisymmetric semi-cylindrical furnaces through the two side-by-side heat exchange tube bundles and two to three circles of water-cooled tube bundles. The burner adopts a premixed membrane-type wall water-cooled manner with two opposite planes or semi-circular surfaces for burning, and then the flue gas flushes the two opposite heat exchange regions. The present invention has a compact structure, low resistance, and high heat transfer efficiency; at the same time, the premixed water-cooled burning temperature is low, the load is uniform, the adjustment ratio is large, and the NO*ₓ* emissions are extremely low; and deflagration is prevented, safety is high, and the present invention is suitable for pure natural gas burning or blended burning of natural gas with low/zero-carbon fuel or pure low/zero-carbon fuel burning.

In addition, compared with a traditional vertical water tube steam boiler, the burner and the heat exchanger of the present invention communicate with the upper annular header and the lower annular header by using integrally or partially detachable flanges, so that the burner and heat exchanger can be simultaneously inspected offline, significantly improving the maintainability of the burner and heat exchanger.

## Claims

1. A vertical water tube built-in premixed membrane-type wall-cooling burner, **characterized by** comprising a first distribution chamber (12), a second distribution chamber (13), and a water-cooled tube bundle, wherein the first distribution chamber (12) is provided with an air inlet (112), a gas distribution tube (121) is disposed in the first distribution chamber (12), and a gas inlet (111) is formed in the gas distribution tube (121); the first distribution chamber (12) communicates with the second distribution chamber (13); the second distribution chamber (13) comprises a partition board (131) and distribution orifice plates (132), one end of the partition board (131) is connected with the first distribution chamber (12), and the other end of the partition board is connected with the distribution orifice plates (132); and a vertical region enclosed by the partition board (131) and the distribution orifice plates (132) is the second distribution chamber (13), the distribution orifice plates (132) directly face the water-cooled tube bundle, the water-cooled tube bundle is a membrane-type wall tube bundle, the membrane-type wall tube bundle is provided with gas flow holes, and a membrane-type wall surface is a flat surface, an arc-shaped surface or a bending surface.

2. The vertical water tube built-in premixed membrane-type wall-cooling burner according to claim 1, **characterized in that** the first distribution chamber (12) is internally provided with a first flow-equalizing orifice plate (122) and a plurality of spoiler columns (125), a second flow-equalizing orifice plate (123) is arranged between the first distribution chamber (12) and the second distribution chamber (13), the gas distribution tube (121) is arranged between the first flow-equalizing orifice plate (122) and the second flow-equalizing orifice plate (123), the spoiler columns (125) are arranged in front and rear of the first flow-equalizing orifice plate (122), the spoiler columns (125) are arranged in a length direction of the gas distribution tube (121), two ends of the spoiler columns (125) are connected with the first distribution chamber (12), cross sections of the spoiler columns (125) are triangular, V-shaped, square or circular, when the cross sections are V-shaped, bending angles of the V shapes face incoming air, and 3-50 spoiler columns (125) are disposed.

3. The vertical water tube built-in premixed membrane-type wall-cooling burner according to claim 1, **characterized in that** the gas distribution tube (121) comprises a first gas distribution tube (1211), second gas distribution tubes (1212), first gas spray orifices (1213), second gas spray orifices (1214) and spoilers (1215); one end or two ends of the first gas distribution tube (1211) is/are provided with a gas inlet (111), the first gas distribution tube (1211) communicates with the second gas distribution tubes (1212), the first gas spray orifices (1213) are uniformly formed in a gas outlet surface of the first gas distribution tube (1211), and the second gas spray orifices are uniformly formed in side surfaces of the second gas distribution tubes (1212); 1-8 rows of the first gas spray orifices (1213) are provided, 1-4 rows of the second gas spray orifices (1214) are provided, the first gas spray orifices (1213) are arranged in line or in a staggered manner, and the second gas orifices (1214) are arranged in line or in a staggered manner; and the spoilers (1215) are welded at a top and a bottom of an interface between the first gas distribution tube (1211) and the second gas distribution tubes (1212).

4. The vertical water tube built-in premixed membrane-type wall-cooling burner according to claim 3, **characterized in that** a flow area in the first gas distribution tube (1211) in a gas inlet direction remains unchanged or gradually decreases, and a flow area in the second distribution chamber (13) in a mixed gas flow direction remains unchanged or gradually decreases.

5. The vertical water tube built-in premixed membrane-type wall-cooling burner according to claim 3, **characterized in that** the first gas distribution tube (1211) is horizontally placed above the first distribution chamber (12), one ends of 3-20 uniformly-arranged second gas distribution tubes (1212) vertically communicate with the first gas distribution tube (1211), and the other ends of the second gas distribution tubes extend into the first distribution chamber (12); the gas inlet(s) (111) is/are located at one end, two ends and/or a middle of the first gas distribution tube (1211), 1-3 gas inlets (111) are provided, and the second gas distribution tubes (1212) are provided with the uniformly-arranged second gas spray orifices (1214) in an air incoming direction or away from the air incoming direction or in both directions.

6. The vertical water tube built-in premixed membrane-type wall-cooling burner according to claim 1, **characterized in that** mixed gas of gas and air in the burner (1) enters perpendicular to the distribution orifice plates (132) or parallel to the distribution orifice plates (132), and 1-3 layers of the distribution orifice plates (132) are disposed; a third flow-equalizing orifice plate (124) is disposed at a tail of the first distribution chamber (12), a turning deflector (126) is disposed when the gas enters parallel to the distribution orifice plate (132), the turning deflector (126) is located at a junction of the first distribution chamber (12) and the second distribution chamber (13), and the turning deflector (126) is connected with the third flow-equalizing orifice plate (124); two sides of the turning deflector (126) are connected with two sides of the first distribution chamber (12) and the second distribution chamber (13), and a cross section is in a right angle "U" shape, a smooth transition "U" shape, a "V" shape, an "L" shape or a linear shape; and when the turning deflector (126) is in the linear shape, the turning deflector (126) is fixedly connected or hinged with the third flow-equalizing orifice plate (124).

7. The vertical water tube built-in premixed membrane-type wall-cooling burner according to claim 1, **characterized in that** when mixed gas enters parallel to the distribution orifice plates (132), 1-10 vertical partition boards parallel to a mixed gas flow direction are disposed in the second distribution chamber (13) in a direction perpendicular to the mixed gas flow direction, front edges of the vertical partition boards are connected with a top of the second distribution chamber (13), rear edges of the vertical partition boards are connected with the distribution orifice plates (132) or spaced apart from the distribution orifice plates (132) by 5-20 mm, and top ends and bottom ends of the vertical partition boards are respectively connected to a top surface and a bottom surface of the second distribution chamber (13).

8. The vertical water tube built-in premixed membrane-type wall-cooling burner according to claim 1, **characterized in that** the membrane-type wall tube bundle comprises a plurality of light tubes, the adjacent two light tubes are welded by flat steel (16), a length direction of the flat steel (16) is parallel to a light tube bank, the flat steel (16) is located on or deviates from a center line of the light tube bank, and the flat steel (16) is correspondingly welded on both sides or one sides to the light tubes; a thickness of the flat steel (16) is in a range from 3 mm to 20 mm, a welding penetration of an arc-shaped surface of the flat steel (16) in contact with the light tubes in a thickness direction is at least 3 mm, the flat steel (16) is provided with regular premixed gas spray orifices (161) from bottom to top, namely, gas flow holes, center lines of the premixed gas spray orifices (161) are perpendicular to or inclined to a plane of the flat steel (16), a single line, two lines or three lines premixed gas spray orifices (161) are provided, when more than one line of premixed gas spray orifices (161) are provided, the adjacent two lines of premixed gas spray orifices are arranged in line or in a staggered manner, and the premixed gas spray orifices (161) are circular, obround, triangular or rectangular; long axes of the obround premixed gas spray orifices are parallel to or perpendicular to longitudinal center lines of the tubes; and the triangular premixed gas spray orifices are arranged in an upright, reverse, or inclined manner, and long sides of the rectangular premixed gas spray orifices are parallel to or perpendicular to the longitudinal center lines of the tubes.

9. The vertical water tube built-in premixed membrane-type wall-cooling burner according to claim 1, **characterized in that** the water-cooled tube bundle comprises at least two rows of light tubes, flat steel (16) is welded to the first row of light tubes (1421), the flat steel (16) is located between the second row of light tubes (1422) to form a gap with the second row of light tubes (1422), and flat steel fins (163) uniformly arranged or cushion blocks (162) are welded to the flat steel (16); the flat steel fins (163) are cambered surfaces or rectangular surfaces, cross sections of the cushion blocks (162) are square, circular, or obround, the cushion blocks (162) are welded to the second row of light tubes (1422), and uniformly arranged gas flow holes are formed among the light tubes, the cushion blocks (162), and the flat steel (16); the flat steel (16) is provided with an adjustable spray orifice baffle (18) to block the premixed gas spray orifices (161) or the gas flow holes formed in the cushion blocks (162), the adjustable spray orifice baffle (18) is provided with premixed gas spray orifices (161) of the same size and position as the gas flow holes, the adjustable spray orifice baffle (18) slides in an axial direction of a membrane-type wall tube, and a sliding range is able to cover the premixed gas spray orifices (161).

10. The vertical water tube built-in premixed membrane-type wall-cooling burner according to claim 1, **characterized in that** the membrane-type wall tube bundle comprises a plurality of light tubes, channel steel, steel I-beams, arc steel, angle steel, small circular tubes or semi-circular tubes are welded among the light tubes, and when the arc steel is welded among the light tubes, radian α of the arc steel is 0<α<π; and when the angle steel is welded among the light tubes, an included angle β of the angle steel is 0<β<180°.

11. The vertical water tube built-in premixed membrane-type wall-cooling burner according to claim 1, **characterized in that** the membrane-type wall tube bundle is a combination of finned tubes and light tubes, the finned tubes are bent on opposite sides, the light tubes face a furnace or face away from the furnace, and the finned tubes are spiral finned tubes, circular finned tubes, square finned tubes or H-shaped finned tubes.

12. A vertical water tube built-in premixed membrane-type wall-cooling burning gas boiler, **characterized by** comprising a burner (1), a heat exchanger (2), a flue (3), an economizer (4), a condenser (5), a chimney (6), and a fan (7); the burner (1) and the heat exchanger (2) enclose two axisymmetric semi-cylindrical furnaces, and two heating surfaces of a planar heat exchange section (14) and an arc-shaped heat exchange section (21) are disposed inside the furnaces; the burner (1) is disposed on chord sides of the semi-cylindrical furnaces, and the heat exchanger (2) is disposed on arc sides of the semi-cylindrical furnaces, or the burner (1) is disposed on the arc sides of the semi-cylindrical furnaces, and the heat exchanger (2) is disposed on the chord sides of the semi-cylindrical furnaces, or the burner (1) and the heat exchanger (2) are respectively disposed on the arc sides of the two semi-cylindrical furnaces; the burner (1) uses a premixed water-cooled burner, with a tube bundle of the planar heat exchange section (14) or the arc-shaped heat exchange section (21) as a water-cooled tube bundle of the burner (1); when the burner (1) is located on the chord sides of the semi-cylindrical furnaces, flue gas from the two semi-cylindrical furnaces flows towards an outside of a cylinder; when the burner (1) is located on the arc sides of the semi-cylindrical furnaces, the two semi-cylindrical furnaces communicate with each other, and the flue gas flows into the cylinder or flows in from one side of the cylinder and flows out from the other side of the cylinder; the burner (1), the heat exchanger (2), the flue (3), the economizer (4), the condenser (5), and the chimney (6) communicate with one another in a flow direction of the flue gas; and the burner (1) uses the vertical water tube built-in premixed membrane-type wall-cooling burner according to any one of claims 1-12.

13. The vertical water tube built-in premixed membrane-type wall-cooling burning gas boiler according to claim 12, **characterized in that** the planar heat exchange section (14) comprises a tubular upper header (141), side-by-side heat exchange tube bundles (142), and a tubular lower header (143); two ends of the side-by-side heat exchange tube bundles (142) are respectively connected with the tubular upper header (141) and the tubular lower header (143); the arc-shaped heat exchange section (21) comprises an annular upper header (211), an inner-ring heat exchange tube bundle (212), an outer-ring heat exchange tube bundle (213) and an annular lower header (215), the outer-ring heat exchange tube bundle (213) and the inner-ring heat exchange tube bundle (212) are disposed along a semi-cylindrical surface, and two ends of the outer-ring heat exchange tube bundle (213) and the inner-ring heat exchange tube bundle (212) are connected with the annular upper header (211) and the annular lower header (215); the outer-ring heat exchange tube bundle (213) and the inner-ring heat exchange tube bundle (212) are arranged in a staggered manner; a bottom end of the annular upper header (211) and a top end of the annular lower header (215) are respectively in sealed connection with a furnace upper bottom plate (24) and a furnace lower bottom plate (25); and housing baffles (26) are disposed on outer sides of the two semi-cylindrical furnaces.

14. The vertical water tube built-in premixed membrane-type wall-cooling burning gas boiler according to claim 13, **characterized in that** when a farthest distance between the tubular upper header (141) and the tubular lower header (143) is less than a distance between a bottom of the annular upper header (211) and a top of the annular lower header (215), the burner (1) is detachable as a whole, a tubular header steam outlet (145) and a tubular header water inlet (144) are respectively formed in two ends of the tubular upper header (141) and the tubular lower header (143) in an axis direction, the tubular header steam outlet (145) and the tubular header water inlet (144) are connected with a communicating tube (29) through a flange, the communicating tube (29) is a 180° bent tube, one end of the communicating tube is tightly connected with the flange on the tubular upper header (141) or the tubular lower header (143), and the other end of the communicating tube communicates with an outer side of the annular upper header (211) or the annular lower header (215); when the farthest distance between the tubular upper header (141) and the tubular lower header (143) is greater than the distance between the bottom of the annular upper header (211) and the top of the annular lower header (215), the burner (1) is partially detachable, and the remaining part of the burner (1), except for the tubular upper header (141), the side-by-side heat exchange tube bundle (142), and the tubular lower header (143), is able to be withdrawn in a horizontal direction; two ends of axes of the tubular upper header (141) and the tubular lower header (143) respectively communicate with the annular upper header (211) and the annular lower header (215), and connecting parts are an inner side face or a top of the annular upper header (211) and an inner side face or a bottom of the annular lower header (215); and a disassembly part of burner (1) is connected and sealed with the annular upper header (211), the annular lower header (215), the furnace upper bottom plate (24), the furnace lower bottom plate (25), and the housing baffles (26) using a drawer structure.

15. The vertical water tube built-in premixed membrane-type wall-cooling burning gas boiler according to claim 13, **characterized in that** when the burner (1) is disposed on the chord sides of the semi-cylindrical furnaces, the planar heat exchange section (14) tube bundle is used as a water-cooled tube bundle of the burner (1), and the flue (3) is disposed on outer sides of arc-shaped surfaces of the two semi-cylindrical furnaces; and when the burner (1) is disposed on the arc sides of the semi-cylindrical furnaces, the outer-ring heat exchange tube bundle (213) and the inner-ring heat exchange tube bundle (212) disposed along the semi-cylindrical surface serve as the water-cooled tube bundles of the burner, and the flue (3) is disposed on a side surface between the two semi-cylindrical furnaces or on an outer side of the other arc-shaped surface of the semi-cylindrical furnaces.

16. The vertical water tube built-in premixed membrane-type wall-cooling burning gas boiler according to claim 13, **characterized in that** a downcomer (214) is disposed on a periphery of a heating surface of the heat exchanger (2), and two ends of the downcomer (214) are connected with the annular upper header (211) and the annular lower header (215) to form a natural circulation steam boiler.

17. The vertical water tube built-in premixed membrane-type wall-cooling burning gas boiler according to claim 13, **characterized in that** radiation heating tube bundles (27) are arranged in the semi-cylindrical furnaces, the radiation heating tube bundles (27) are concave inward at one circumference, and each radiation heating tube bundle is divided into three sections: an upper inclined section, a middle vertical section, and a lower inclined section; and the three sections of one radiation heating tube are located in the same plane, the upper inclined sections and the lower inclined sections face the same direction, tops of the radiation heating tube bundles (27) are connected with an inner side or a top of the annular upper header (211), bottoms of the radiation heating tube bundles (27) are connected with an inner side or a bottom of the annular lower header (215), the radiation heating tube bundles (27) are uniformly arranged in a circumferential direction, and 2-5 radiation heating tube bundles (27) on two sides of the burner (1) decrease lengths of the upper inclined sections and the lower inclined sections.

18. The vertical water tube built-in premixed membrane-type wall-cooling burning gas boiler according to claim 13, **characterized in that** vertical cross sections of the annular upper header (211) and the annular lower header (215) are rectangles, circles, or ellipses with chamfered or inverted arc on all sides, 2-3 circles of vertical heat exchange tube bundles are disposed between the annular upper header (211) and the annular lower header (215), the inner-ring heat exchange tube bundle (212) close to the furnace is a light tube, a spiral finned tube or an extended surface tube, when the inner-ring heat exchange tube bundle (212) is the spiral finned tube, a height of a fin is less than 10 mm, and when the inner-ring heat exchange tube bundle (212) is the extended surface tube, a height of an extended surface is less than 10 mm; the outer-ring heat exchange tube bundle (213) is a reinforced heat exchange tube bundle of a spiral finned tube, extended surface tube, or special-shaped tube structure, and the height of the fin or the extended surface is in a range from 30 mm to 100 mm; an annular header water inlet (216) is disposed below or at a bottom of a steam-water boundary on a side surface of the annular upper header (211), and an annular header steam outlet (217) is disposed above or at a top of the steam-water boundary on the side surface of the annular upper header (211); and a pollutant drainage outlet (218) is formed in a side surface or a bottom of the annular lower header (215).

19. The vertical water tube built-in premixed membrane-type wall-cooling burning gas boiler according to claim 13, **characterized in that** 1-3 circles of tube bundles are disposed at the arc-shaped heat exchange section (21), a cross section enclosed by the tube bundles of the arc-shaped heat exchange section (21) is arc-shaped, trapezoidal or "V"-shaped, and 1-2 rows of light tubes, spiral finned tubes, special-shaped tubes and/or gap deflectors (23) are disposed at the side-by-side heat exchange tube bundle (142); a gap deflector (23) is disposed between two adjacent heat exchange tubes of the outer-ring heat exchange tube bundle (213), and the gap deflector (23) is located on an inner side of the outer-ring heat exchange tube bundle (213); or, a gap deflector (23) is disposed between two adjacent heat exchange tubes of the inner-ring heat exchange tube bundle (212), and the gap deflector (23) is located on an outer side of the inner-ring heat exchange tube bundle (212); or, gap deflectors (23) are arranged in both the outer-ring heat exchange tube bundle (213) and the inner-ring heat exchange tube bundle (212); and a reinforced heat exchange channel is formed between the gap deflector (23) and an outer wall of the heat exchange tube.

20. The vertical water tube built-in premixed membrane-type wall-cooling burning gas boiler according to claim 13, **characterized in that** two heat exchange tubes at two ends of the inner-ring heat exchange tube bundle (212) and the outer-ring heat exchange tube bundle (213) are both disposed as light tubes, a sealing tube (28) is disposed between the light tubes and tube bundles at two ends of the side-by-side heat exchange tube bundle (142), the sealing tube (28) is a light tube, the sealing tube (28) is tangent to the tube bundles at the two ends of the side-by-side heat exchange tube bundle (142), the two ends of the sealing tube (28) respectively communicate with the annular upper header (211) and the annular lower header (215), and the two ends of the sealing tube (28) are provided with bending structures; and a sealing plate (22) is disposed to seal the two light tubes at the same end of the inner-ring heat exchange tube bundle (212) and the outer-ring heat exchange tube bundle (213), the sealing tube (28), and a longitudinal gap of the side-by-side heat exchange tube bundle (142) at one end or two ends when the burner (1) is located on the arc sides of the semi-cylindrical furnaces.

21. The vertical water tube built-in premixed membrane-type wall-cooling burning gas boiler according to claim 12, **characterized in that** a first flow-equalizing orifice plate (122), a second flow-equalizing orifice plate (123), a third flow-equalizing orifice plate (124), a distribution orifice plate (132), a sealing plate (22), a furnace upper bottom plate (24), a furnace lower bottom plate (25), and a housing baffle (26) are all made of materials that are resistant to high temperature and deformation, and tube bundle surfaces of a side-by-side heat exchange tube bundle (142), an inner-ring heat exchange tube bundle (212), and a radiation heating tube bundle (27) in direct contact with high-temperature flue gas are processed by spraying a nickel-chromium alloy; and the burner (1) is a natural gas burner, a natural gas blended low/zero-carbon fuel burner, or a pure low/zero-carbon fuel burner, and a working medium of the heat exchanger (2) is water or heat conducting oil.

22. The vertical water tube built-in premixed membrane-type wall-cooling burning gas boiler according to claim 12, **characterized in that** when the burner (1) is disposed on the chord sides of the semi-cylindrical furnaces, one double-sided burner or two single-sided burners are arranged with a side-by-side heat exchange tube bundle (142) as a water-cooled tube bundle, and a flow area of the burner (1) from a burner inlet to a burner end gradually decreases; when one double-sided burner is arranged, gas enters the burner (1) on one side in a direction where semi-cylindrical furnace chords are located, and exits on two sides in a direction perpendicular to a gas inlet direction, and the burner (1) is axisymmetric in the direction perpendicular to the gas inlet direction; and when the two single-sided burners are arranged, the gas enters the burner (1) on the two sides or one side in the direction where the semi-cylindrical furnace chords are located, and exits on the two sides in the direction perpendicular to the gas inlet direction, and the burner (1) is centrosymmetric or axisymmetric.

23. The vertical water tube built-in premixed membrane-type wall-cooling burning gas boiler according to claim 12, **characterized in that** when the burner (1) is disposed on the arc sides of the semi-cylindrical furnaces, one or two single-sided burners are arranged with an outer-ring heat exchange tube bundle (213) and an inner-ring heat exchange tube bundle (212) as water-cooled tube bundles, a front end of a cross section of the burner (1) is square, a rear end is crescent-shaped, and a distribution orifice plate (132) is arc-shaped; a diameter of the outer-ring heat exchange tube bundle (213) is greater than a diameter of the inner-ring heat exchange tube bundle (212), a gap formed between adjacent tubes of the outer-ring heat exchange tube bundle (213) is in a range from 2 mm to 5 mm, and a gap formed between adjacent tubes of the inner-ring heat exchange tube bundle (212) is in a range from 4 mm to 10 mm; and the number of lines of the outer-ring heat exchange tube bundle (213) is the same as the number of lines of spray orifices in the distribution orifice plate (132), or the number of lines of the spray orifices in the distribution orifice plate (132) is an integral multiple of the number of lines of the outer-ring heat exchange tube bundle (213), and the outer-ring heat exchange tube bundle (213) directly faces the spray orifices in the distribution orifice plate (132).

24. The vertical water tube built-in premixed membrane-type wall-cooling burning gas boiler according to claim 12, **characterized in that** the flue (3) comprises flue gas headers (31), a flue gas conduit (32) and a flue outlet (33), when the burner (1) is disposed on the chord sides of the semi-cylindrical furnaces, double flues are provided, the two flue gas headers (31) are connected through the flue gas conduit (32), and flue gas in the two flue gas headers (31) is collected through the flue gas conduit (32) and then discharged from the flue outlet (33); when the burner (1) is disposed on the arc sides of the semi-cylindrical furnaces, a single flue is provided, and the flue gas in the flue gas headers (31) is directly discharged from the flue outlet (33); the flue outlet (33) sequentially communicates with the economizer (4), the condenser (5) and the chimney (6); and an outlet of the fan (7) communicates with the burner (1), and a narrow surface of the fan (7) is parallel to a corresponding connection surface of the burner (1).

25. The vertical water tube built-in premixed membrane-type wall-cooling burning gas boiler according to claim 12, **characterized in that** one or two ignition needles (15) are arranged on each burning surface, the ignition needle (15) is able to extend into a furnace from a side surface, a top or a bottom of the furnace, the ignition needle (15) correspondingly penetrates through a sealing plate (22) or a furnace upper bottom plate (24) or a furnace lower bottom plate (25) to extend into the furnace, and the ignition needle (15) is 10-50 mm away from an outer wall of a side-by-side heat exchange tube bundle (142) or an outer wall of an inner-ring heat exchange tube bundle (212).
